# EUROPEAN PATENT SPECIFICATION

(11) **EP 1 705 349 B1**
(45) Date of publication and mention of the grant of the patent: **19.05.2010**
(21) Application number: 06006014.2
(22) Date of filing: 23.03.2006
(51) Int. Cl.: F02B 23/08

(54) **Control apparatus of multi-cylinder engine**
Steurerungsvorrichtung einer Mehrzylinderbrennkraftmaschine
Dispositif de contrôle d'un moteur à combustion interne multicylindre

(30) Priority: 23.03.2005 JP 2005083745; 23.03.2005 JP 2005083658
(43) Date of publication of application: 27.09.2006
(73) Proprietor: Mazda Motor Corporation, Aki-gun, Hiroshima 730-8670 (JP)
(72) Inventor: Watanabe, Kazutoyo Mazda Motor Corporation, Aki-gun Hiroshima 730-8670 (JP); Sasaki, Junsou Mazda Motor Corporation, Aki-gun Hiroshima 730-8670 (JP); Wasada, Mitsunori Mazda Motor Corporation, Aki-gun Hiroshima 730-8670 (JP); Araki, Keiji Mazda Motor Corporation, Aki-gun Hiroshima 730-8670 (JP); Inatomi, Hiroshi, Honjo-shi Saitama 367-0055 (JP)
(74) Representative: Müller-Boré & Partner Patentanwälte

(56) References cited:
- DE-A1- 10 240 913
- JP-A- 4 166 624
- JP-A- 11 107 718
- US-A- 4 932 378
- US-A- 5 353 763
- US-A1- 2001 032 600
- US-B1- 6 422 184
- HOLGER FINDEISEN ET AL: "Development of an Actuator for a Fast Moving Flap for Impulse Charging" SAE TECHNICAL PAPER SERIES, SOCIETY OF AUTOMOTIVE ENGINEERS, WARRENDALE, PA, US, [Online] vol. 2003-01-0402, 1 January 2003 (2003-01-01), XP007905956 ISSN: 0148-7191 Retrieved from the Internet: URL:www.sae.org>
- PETER KREUTER ET AL: "An Impulse Charging System for SI and Diesel Engines" SAE TECHNICAL PAPER SERIES, SOCIETY OF AUTOMOTIVE ENGINEERS, WARRENDALE, PA, US, vol. 2002-01-1104, 1 January 2002 (2002-01-01), XP007905957 ISSN: 0148-7191

## Description

The present invention relates generally to a control apparatus of a multi-cylinder engine and, more particularly, to a control apparatus of a multi-cylinder engine provided with an impulse charger that generates or charges a highpressure impulse or the air pressure impulse in each cylinder each cycle.

Various techniques for improving engine volumetric efficiency have conventionally been developed for use in a control apparatus of a multi-cylinder engine which is provided with an intake manifold having a built-in surge tank. connected to intake ports of individual cylinders by branching channels, or runners, of the intake manifold.

Following references are Japanese laid open Patent publications (JP) or works (Non-JP) with respect to the control apparatus relates to the present invention.
JP1: JP No.2000-248946 (US Patent No. 6,422,184)
Non-JP1: "Impulse charging boosts torque at low speed," in European Automotive Design, Findlay Publications Co. Ltd., February, 2004
Non-JP2: "Development of an Actuator for a Fast Moving Flap for Impulse Charging," paper in European Automotive Design, Findlay Publications Co. Ltd. January, 2003, see also SAE Technical Paper Series 2003-01-0402.

For example, Non-JPl introduces a technique for increasing torque in a lower speed range by impulse charging. An impulse charger or an impulse charger described in Non-JP1 is provided with a solenoid valve disposed at an intermediate of each runner of an intake manifold so that the solenoid valve, which is electro magnetically controlled to move along a runner direction, is closed at a halfway point in each intake stroke each cycle to develop a vacuum (negative pressure) in a cylinder and is opened just before a piston in the cylinder reaches a bottom-center (BC) of the intake stroke to rapidly draw the air into the cylinder.

Other conventional arrangements for accomplishing impulse charging are described in JP1 and Non-JP1. According to these publications, a flap valve is used as a principal element of an impulse charger which charges the air pressure impulse.

In the above mentioned impulse charging apparatus, a large pumping loss would occur due to a large negative pressure which would develop at each anterior halfway point in each intake stroke. Meanwhile, impulse itself would be difficult to achieve at high-speed region. Therefore, the impulse generating apparatus has been used only limited specific driving region. As the result, no one considered to use the impulse generating apparatus for the control of the emission characteristics.

Further reference is made to US 5, 353, 763 and DE 102 40 913.

In light of the aforementioned circumstances, it is an object of the present invention to provide a control apparatus of a multi-cylinder engine utilizing improvement of emission characteristics.

A control apparatus of a multi-cylinder engine of the present invention is provided with intake ducts which supply the air through individual intake ports to a plurality of cylinders and an impulse charger which charges the impulse in each cylinder at halfway points in each intake stroke during each intake valve is opening the corresponding intake port. The apparatus comprises engine speed detecting means which detects engine speed, engine load detecting means which detects engine load conditions, and control means which controls operation of the impulse charger based on detections by the engine speed and engine load detecting means. In this control apparatus of the multi-cylinder engine, the control means operates the impulse charger at a low-speed region at low- and high-load regions except medium-load region at low temperature region including cold-start. According to the present invention, when the engine runs at low-speed region, the impulse charger is turned off at medium-load region. This improves fuel economy because the impulse charger does not affect the pumping loss at the medium-load region. Meanwhile, even when the engine runs at low-speed region, the impulse charger charges impulse to each cylinder each cycle of intake stroke so that the large negative pressure can be generated in each cylinder each cycle. This results in improved fuel evaporability and fuel-air mixability, serving thereby improving overall combustion stability and emissions characteristics of engine. Moreover, at the low-speed and high-load region, the volumetric efficiency includes in high level and improves output performance of the engine due to impulse charging by the impulse charger.

In one aspect of the present invention, the control apparatus of the multi-cylinder engine further includes temperature detecting means which detects, as a control parameter, the temperature with respect to cylinder of the engine. The control means operates the impulse charger to charge the impulse in each cylinder each cycle during cold-start such that the detected temperature is lower than a preset cylinder temperature. In this arrangement, the fuel evaporability is improved by the impulse charged by the impulse charger at engine cold-start region at which both the fuel evaporability and the combustion stability normally deteriorate.

In another aspect of the present invention, the impulse charger includes a variable impulse charge timing mechanism which is capable of varying an impulse charging timing of the impulse charger, and the control means controls the variable impulse charge timing mechanism to retard the impulse phase in such a manner that the lower the engine temperature is, the more the impulse charger would retard the impulse phase in each halfway of intake stroke each cycle. In this arrangement, the lower the engine temperature is, the further opening timing of the impulse charger retards in each intake stroke each cycle. As the result, because the negative pressure includes and therefore fuel evaporability improves in each cylinder each cycle as the engine temperature is lower, the pumping loss is reduced while the fuel economy is improved at lower engine temperature, such as engine cold-start, at which high combustion stability is required.

In another aspect of the present invention, the control means is so arranged as to drive the impulse charger to charge the impulse in each cylinder each cycle at engine low-speed and low-load region even when engine runs during warm-up at which the cylinder temperature is higher than a preset cylinder temperature while to drive the impulse charger to charge the impulse in each cylinder each cycle at a region higher-speed during the cold-start. Thus, the impulse charger charges the impulse up to a relatively higher engine speed region during cold-start at which the engine exhibits poor combustion stability thereby, at wide regions, accelerating fuel vaporization and atomization and improving the combustion stability over a wide operating range of the engine.

In another aspect of the present invention, the control means operates the impulse charger when engine runs at the idle speed during warm-up, at which the engine temperature is at least a preset cylinder temperature. In this arrangement, the impulse charger accelerates intake velocity by charging impulse in each cylinder each cycle during warm-up at which the emission characteristics should be improved. As a result, the fluid is forced into each cylinder in each intake stroke by the fast intake flow, thereby accelerating fuel vaporization and atomization and improving the fuel-air mixability.

In another aspect of the present invention, the control apparatus is provided with fuel injectors for distributed the cylinders to inject fuels in each cylinder each cycle under the control of the control means. The control means operates each injector to inject the fuel at each anterior halfway point of intake stroke each cycle prior to the charged impulse during cold-start while to inject the fuel at proximate timing at which impulse charger charges the impulse each cycle during warm-up. In this arrangement, because each injector injects the fuel at a timing where the cylinder pressure is high or prior to the impulse charging during cold-start at which the engine exhibits poor combustion stability, thereby accelerating fuel vaporization and atomization while improving the combustion stability. On the contrary, because each injector injects the fuel at proximate timing where the impulse charger charges impulse each cycle during warm-up, the fluid is forced into each cylinder in each intake stroke by the fast intake flow, thereby accelerating fuel vaporization and atomization and improving the fuel-air mixability. To this end, the fuel is also efficiently forced into the cylinder and well mixed with fresh the air, wherein the fresh the air is cooled by absorption of latent heat by vaporization of the fuel. In this arrangement, even when the air/fuel ratio is increased to enrich the mixture under high-load conditions, it is possible to prevent the fuel from adhering to walls of the intake ducts and enhance a knocking avoidance effect achieved by the latent heat absorption. Thus, this arrangement enables to control the fuel injection preferably in accordance with engine heat conditions.

In another aspect of the present invention, the control apparatus of engine is provided with an interconnection passageway which is positioned at a downstream of the impulse charger and is so connected to the intake ducts as to interconnect the intake ducts with each other, a valve mechanism which alternately opens and closes a joint channel which interconnects the interconnection passageway with the intake ducts under the control of the control means. The control means opens the valve mechanism to connect the interconnection passageway with the intake ducts when the engine is in low-speed and at least part-load region. In this arrangement, the control means enables to turn off the impulse charger by opening the interconnection passageway so as to attenuate the impulse charged by the impulse charger, thereby substantially deactivating the impulse charger.

In another aspect of the present invention, the impulse charger includes a variable impulse charge timing mechanism which is capable of varying an impulse charging timing of the impulse charger, and the control means controls an impulse charging timing through the variable impulse charge mechanism. In this arrangement, the control means operates the variable impulse charge timing mechanism in such a manner that the closer the engine load approaches to a threshold of medium-load, the more the impulse charger would advance the impulse charging timing. In this arrangement, as the engine load includes to the threshold of medium-load, the each opening timing of the impulse charger approaches in each corresponding intake impulse charging timing each cycle. this attenuates the impulse charged by the impulse charger at low-load region, thereby reducing the pumping loss at a region of higher load while improving fuel economy.

In another aspect of the present invention, the impulse charger includes a variable impulse charge timing mechanism which is capable of varying an impulse charging timing of the impulse charger, and the control means controls an impulse charging timing through the variable impulse charge timing mechanism in such a manner that the closer the engine load approaches to wide open throttle, the more the impulse charger would retard the impulse charging timing. In this arrangement, as the engine load includes to wide open throttle, the each opening timing of the impulse charger far from each corresponding intake valve opening timing each cycle, this enhance the impulse charged by the impulse charger at high-load region, thereby improving the output at the high-load region of higher load.

In another aspect of the present invention, catalyst activity detecting means which detects the activity status of an exhaust gas catalytic converter of the engine, engine speed detecting means which detects engine speed, engine load detecting means which detects the engine load, ignition means which ignites mixture of injected fuel and the air. the control means controls the impulse charger and the ignition means based on the catalyst activity detecting means, engine speed and load detecting means. The control means operates impulse charger to charge the impulse in each cylinder each cycle at low-temperature state lower than an active temperature for the exhaust gas catalytic converter and delays an ignition timing of the ignition means to a specified timing which is set after top center of compression stroke in operation of the impulse charger. In this arrangement, a catalyst activity accelerate mode is conducted in which the impulse charger is in operation thereby impulse and therefore supercharging is achieved. As the result, under the circumstances where the exhaust gas catalytic converter does not heated in the active temperature, large negative pressure is generated in each cylinder each cycle immediately before the impulse charger open its valve and the intake flows which are introduced into each cylinder each cycle are accelerated, causing improvement of fuel evaporability and fuel-air mixability which are serving overall combustion stability. In this arrangement, a limitation of ignition delay can be in wide range, thus ensures a large delay range of ignition. This leads the exhaust gas temperature and therefore the temperature of the exhaust gas catalytic converter rises in the catalyst activity accelerate mode because of the large degree of delay of ignition where the ignition can be conducted at specific phase after compression top center. Consequently, the present invention is utmost advantageous in use of the impulse charger by which shortens a time required to regain the catalyst activity at greatest extend in result the low fuel economy and high emission characteristics by delaying the ignition timing of the ignition means ensuring the sufficient delay range.

In another aspect of the present invention, the control apparatus of engine is further provided with temperature detecting means which detects a temperature with respect to a cylinder temperature of engine and a variable impulse charge timing mechanism which is capable of varying an impulse charging timing of the impulse charger. In this arrangement, the control means advances the impulse charging timing of impulse charger as rising the detected cylinder temperature, provided that the detected cylinder temperature reaches to a preset cylinder temperature. This arrangement enables an acceleration of fuel evaporability to give the priority by generating a large impulse when the cylinder temperature is low. On the contrary, the valve timing is advance in accordance with the cylinder temperature so that exceeded negative pressure would be prevented thereby maintaining a proper balance between fuel economy and output performance of the engine.

In another aspect of the present invention, the control means advances the ignition timing of the ignition means with advancing the impulse charger. In this arrangement, the engine is accelerated to be warm-up by delaying the ignition timing in one hand, the proper balance, on the other hand, between the fuel vaporization and atomization by the impulse charger and emission characteristics can be satisfied in accordance with driving conditions by advancing the ignition timing as the retard timing range thereof reduces.

In another aspect of the present invention, the control means controls a impulse charging timing of the impulse charger to be the most retarded phase when the engine runs at a catalyst activity accelerate mode which is, at least, in a first phase. In this arrangement, the largest impulse can be charged in each cylinder each cycle in the first phase of the catalyst activity accelerate mode thereby accelerating the fuel vaporization and atomization at a timing when the conducted mode is in a first phase, in which the activation demand of the exhaust gas catalytic converter is high.

In another aspect of the present invention, the control apparatus of engine is provided with temperature detecting means which detects a temperature with respect to a cylinder temperature of engine and a variable impulse charge timing mechanism which is capable of varying an impulse charging timing of the impulse charger. In this arrangement, the control means controls a impulse charging timing of the impulse charger, which is set at a halfway point of each intake stroke each cycle, to be the most retarded phase when the engine runs at a catalyst activity accelerate mode during which the detected temperature is lower than a preset cylinder temperature. According to this arrangement, activation term to activate the exhaust gas catalytic converter can be shortened during cold-start by accelerating the fuel vaporization and atomization in terms of the impulse charged by the impulse charger.

In another aspect of the present invention, the most retarded phase of the impulse charger is set to a posterior half of each intake stroke each cycle.

In another aspect of the present invention, the control apparatus of engine is provided with fuel injectors for distributed to the cylinders to inject fuels in each corresponding cylinder based on the control of the control means, and the control means activates the fuel injectors so that each fuel injector injects the fuel immediately before the impulse charger charges the impulse. In this arrangement, the intake velocity is raised by the impulse charged by the impulse charger. Accordingly, the injected fuel is forced into each cylinder each cycle by the fast flows of the impulse air, thereby enabling the acceleration of the fuel vaporization and atomization and the air/fuel mixing characteristics.

In another aspect of the present invention, the control means control the fuel injection means to conduct multi-spray within an intake valve opening period of each intake stroke each cycle when the engine runs at catalyst activity accelerate mode. In this arrangement, the fuel is divided into elements to conduct a multispray injection and the impulse is charged by the impulse charger between the anterior and posterior fuel injections. In anterior injection timing, which is prior to the impulse charging, the negative pressure in cylinder is high, so that the anterior element of injected fuel is accelerated in vaporization and atomization. While in posterior injection timing, which is later to the impulse charging, the posterior element of injected fuel is forced into each cylinder each cycle and therefore mixed with the fresh air by the fast flows of the impulse air. This attains utmost improvement of acceleration of the fuel vaporization and atomization and the air/fuel mixing characteristics. An injection timing of anterior fuel may set to posterior halfway of compression stroke in case the fuel injection means is made up with an indirect injection or port fuel-injector.

In another aspect of the present invention, the control means controls the fuel injection means to inject anterior fuel at an anterior halfway point of each intake stroke each cycle prior to the impulse charger charges impulse and to inject posterior fuel at a timing of each intake stroke each cycle at which the impulse charger is about to charge the impulse. In this arrangement, the pumping loss can be reduced at the greatest extend when the engine at run. Means for deactivating the impulse charger can be made up with a variable valve mechanism which is capable of varying an impulse charging timing of the impulse charger so that the variable valve mechanism retards the impulse charging timing at the most retard range.

In another aspect of the present invention, the control means deactivates the impulse charger during a timing of engine start. In this arrangement, the driving characteristics with few pumping loss can be obtained in the timing of engine start. Another arrangement for the impulse switching is a interconnection passageway which is positioned at a downstream of the impulse charger and is so connected to the intake ducts as to interconnect the intake ducts with each other and a valve mechanism which alternately opens and closes a joint channel which interconnects the interconnection passageway with the intake ducts under the control of the control means.

In yet another aspect of the present invention, the impulse charger is provided with a collection member to which the intake ducts are so connected as to inlet of the intake ducts are in communication with the collection member, and the impulse charger is preferably made up of a rotary valve which is accommodated within the collection member and formed therein a opening to selectively intercommunicate and close each intake ducts with the collection member by the rotation in synchronism with a crankshaft. In this arrangement, the rotary valve as the impulse charger so rotated in synchronism with the crankshaft that the rotary valve as the impulse charger can charge the impulse reliably tuned to a resonance frequency in each of the cylinders with desired timing without large intake resistance.

These and other objects, aspects and advantages of the present invention will become more apparent upon reading the following detailed description along with the accompanying drawings.
FIG. 1 is a right side view of a four-cycle multi-cylinder spark ignition engine according to a first embodiment of the present invention;
FIG. 2 is a cross-sectional view taken along lines A-A of FIG. 1;
FIG. 3 is a perspective view schematically showing a principal part of the embodiment of FIG. 1;
FIG. 4 is an enlarged cross-sectional view schematically showing a principal part of FIG. 2;
FIG. 5 is an enlarged fragmentary view showing a principal part of FIG. 1;
FIG. 6 is a block diagram of the engine of the embodiment of FIG. 1;
FIG. 7 is a graph showing a relationship between engine torque and engine speed of a four-cycle multi-cylinder spark ignition engine according to a second embodiment of the present invention;
FIG. 8 is a graph showing a relationship between the phase of the rotary valve and the engine torque together with a relationship between on/off operation of the VIS valves and the engine torque in a low-speed range of the engine;
FIGS. 9A and 9B are graphs showing sequence events of cylinder pressure and volume, and crank angle in cold-start and engine warm-up, respectively;
FIG. 10A is a timing chart showing rotary valve angle phase in so called first idle state in which engine starts at run;
FIG. 10B is a timing chart showing injection timings in so called first idle state in which engine starts at run;
FIG. 10C are graphs showing a timing chart showing ignition timings in so called first idle state in which engine starts at run;
FIG. 11 is a graph showing vaporization ratio to intake temperature;
FIGS. 12A and 12B are timing charts showing the relationship between the phase of rotary valve and temperature;
FIG. 13 is a first part of a flowchart showing the working of the engine of the second embodiment;
FIG. 14 is a second part of the flowchart showing the working of the engine of the second embodiment;
FIG. 15 is a third part of the flowchart showing the working of the engine of the second embodiment.

The present invention is now described with reference to preferred embodiments thereof which are illustrated in the accompanying drawings.

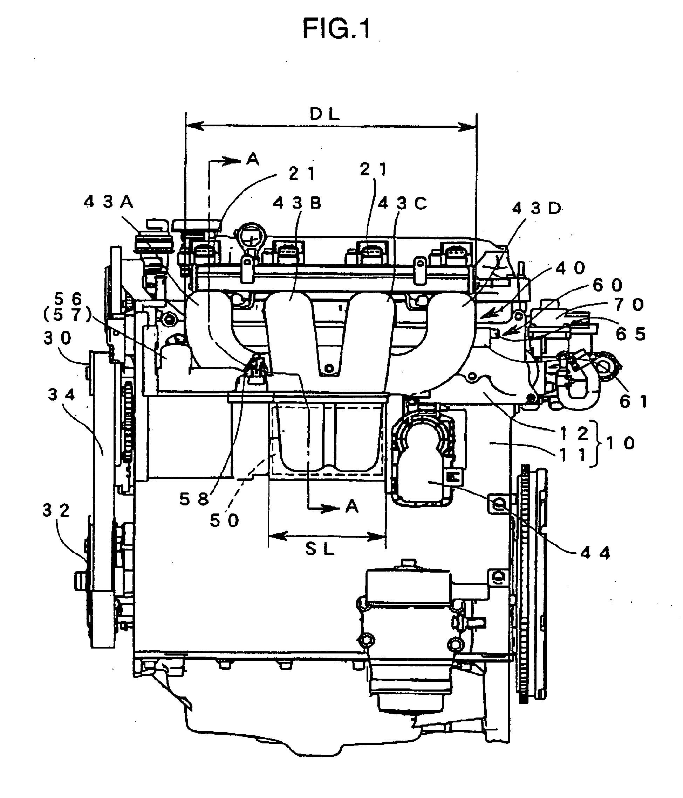

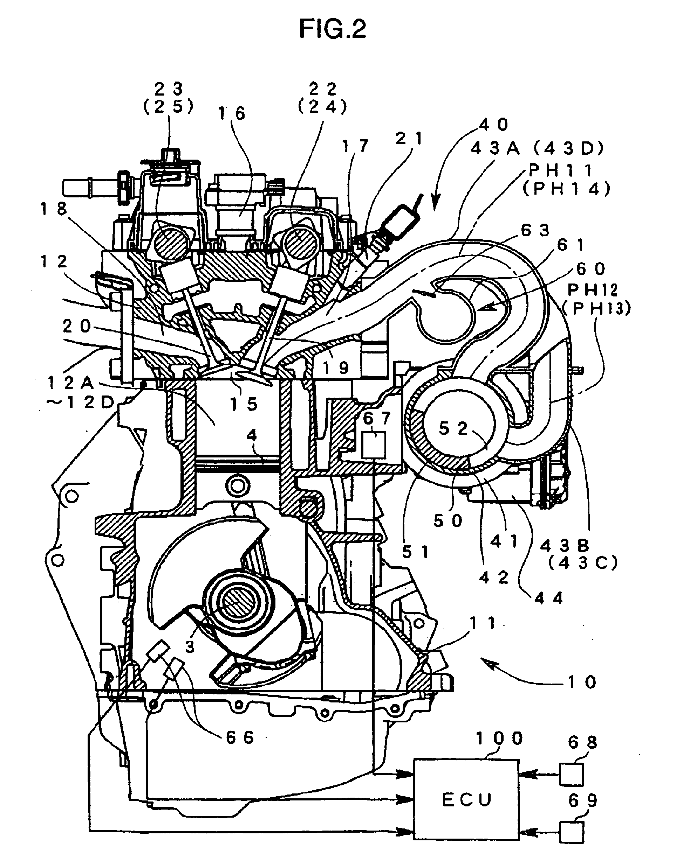

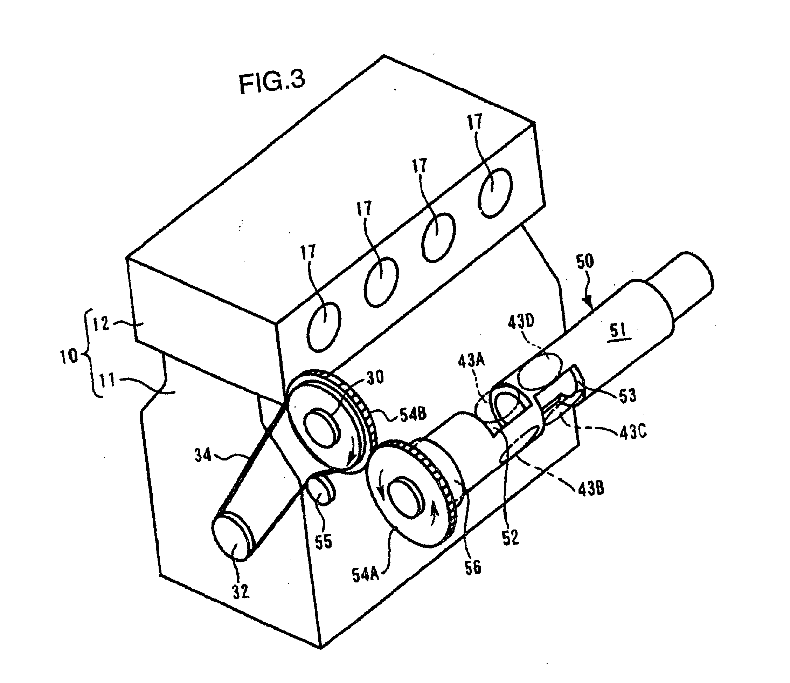

FIG. 1 is a right side view of a four-cycle multi-cylinder spark ignition engine 10 according to a first embodiment of the present invention, FIG. 2 is a cross-sectional view taken along lines A-A of FIG. 1, and FIG. 3 is a perspective view schematically showing a principal part of the embodiment.

Referring to FIGS. 1 to 3, the engine 10 includes a cylinder block 11 and a cylinder head 12 which are formed into a single structure, the cylinder head 12 positioned on top of the cylinder block 11. The engine 10 has first to fourth cylinders 12A-12D in which pistons 4 connected to a crankshaft 3 are fitted, forming a combustion chamber 15 above the piston 4 in each of the cylinders 12A-12D.

Spark plugs 16 are fixed in the cylinder head 12 in such a manner that tips of the spark plugs 16 are located within the combustion chambers 15 formed in the individual cylinders 12A-12D at the top thereof.

There are formed intake ports 17 and exhaust ports 18 which are in communication with the combustion chambers 15 of the individual cylinders 12A-12D in the cylinder head 12 with intake valves 19 and exhaust valves 20 provided in the intake ports 17 and the exhaust ports 18, respectively.

A fuel injector 21 including a needle valve and a solenoid is installed in each of the intake ports 17.

The exhaust ports 18 connect to an exhaust manifold which is not illustrated. Although not illustrated, an exhaust gas catalytic converter which converts the exhaust gas is provided within an exhaust passage downstream of a common collection point of ducts for the individual cylinders 12A-12D from the exhaust manifold. The exhaust gas catalytic converter employs a so-called three-way catalyst, for example, which exhibits extremely high conversion performance with respect to hydrocarbons (HC), carbon monoxide (CO) and nitrogen oxides (NOx) when the air/fuel ratio is almost equal to the stoichiometric air/fuel ratio (or excess air ratio λ=1).

The intake valves 19 and the exhaust valves 20 are actuated by camshafts 22 and 23 supported by the engine 10, respectively, such that the intake ports 17 and the exhaust ports 18 are opened and closed in a synchronized fashion with a specific phase delay from one cylinder to another. The camshafts 22 and 23 are linked to unillustrated cam sprocket gears which is driven by a timing belt (not shown) connected to a cam pulley 30. The cam pulley 30 is mounted rotatably about an axis parallel to the crankshaft 3 on a front side of the engine 10. Also, an output pulley 32 affixed to the crankshaft 3 is mounted on the front side of the engine 10, so that the two pulleys 30 and 32 are interlocked and driven in synchronism with each other.

The engine 10 is provided with variable impulse charge mechanisms 24 and 25 which vary opening and closing timings of the intake and exhaust valves 19 and 20 of the individual cylinders 12A-12D by regulating phases of rotation of the two camshafts 22 and 23. With this arrangement, the phases of the intake valves 19 can be varied with respect to crank angle.

An intake system 40 of the present embodiment includes an intake manifold 41 and a rotary valve 50 which serves as an impulse charger, or a pulse generating valve (PGV), built in the intake manifold 41.

The intake manifold 41 attached to the engine 10 by unillustrated supporting members includes as integral parts thereof a surge tank 42 serving as a collection member horizontally extending in a longitudinal direction of the engine 10 along which the individual cylinders 12A-12D are arranged as well as first to fourth branching intake ducts 43A-43D, each of which have separate intake passage PH11-PH14, branching off from the surge tank 42. A throttle body 44 attached to a rear end of the surge tank 42 incorporates a throttle valve which is not illustrated.

The surge tank 42 is a generally cylindrical part which is in communication with the individual branching Intake ducts 43A-43D. The surge tank 42 serves to absorb pressure differences among the branching intake ducts 43A-43D and prevents abnormal engine noise and sensor malfunctions. In this embodiment, width SL of the surge tank 42 along a cylinder bank direction is made shorter than an overall width DL of the branching intake ducts 43A-43D at downstream ends thereof along the cylinder bank direction (see FIG. 1).

The branching intake ducts 43A-43D provided respectively for the first to fourth cylinders 12A-12D are curved in a generally L-shape. The each branching duct 43A (-43D) is interconnecting the corresponding cylinder 12A (-12D) with the surge tank 42. In the illustrated embodiment, each of the branching intake ducts 43A-43D has an equal intake passage PH11 (-PH14) from an outer curving surface 51 of the rotary valve 50 located within the surge tank 42 to each corresponding intake port 17 in this embodiment.

The rotary valve 50 is a hollow cylindrical member which is rotatably supported with an inner curving surface of the surge tank 42. An outer curving surface 51 of the rotary valve 50 does not contact with the inner curving surface of the surge tank 42 but the gaps are kept therebetween small to minimize leakage.

Referring to FIG. 3, there is provided an input gear 54A fixed to a forward end of the rotary valve 50 concentrically therewith. The input gear 54A is engaged with an output gear 54B which is disposed concentrically with the aforementioned cam pulley 30, so that torque from the crankshaft 3 is transmitted to the input gear 54A via the output gear 54B at a gear ratio of 1:0.5. This means that the rotary valve 50 is synchronized with the cam pulley 30 with a gear ratio of 1:1. In an outer curving wall of the rotary valve 50, there is formed a pair of openings 52 and 53 through which an inner space of the surge tank 42 is fluid in communication with the individual branching intake ducts 43A-43D. These openings 52 and 53 are separated along an axial direction of the rotary valve 50 and are offset in a circumferential direction thereof to create a phase difference of 180 degrees from each other. In rotating direction of the rotary valve 50, the front opening 52 takes leading position to the rear opening 53. Designated by the numeral 55 in FIG. 3 is an idler.

In the illustrated embodiment, there is provided a rotary valve advance mechanism 56 between the rotary valve 50 and the input gear 54A. The rotary valve advance mechanism 56 is essentially a mechanism for varying valve opening timing of the rotary valve 50 by creating a phase difference between the input gear 54A and the rotary valve 50 by use of a rotational phase control apparatus previously proposed by the Applicant of the present invention in Japanese Unexamined Patent Publication No. 1999-107718, or the like. Referring to FIG. 1, the rotary valve advance mechanism 56 is driven by an oil control valve (OCV) system 57 in a controlled fashion. Additionally, the rotary valve advance mechanism 56 is associated with an impulse generating valve PGV angle sensor 58 which detects the phase of the rotary valve 50 as shown in FIG. 1.

The engine 10 of this embodiment is an in-line four-cylinder engine of which first to fourth cylinders 12A-12D are arranged in this order from front to rear. Operating cycles of the cylinders 12A-12D are determined such that the first cylinder 12A, the third cylinder 12C, the fourth cylinder 12D and the second cylinder 12B sequentially go through respective intake strokes in this order. Assuming that a point in time when the first cylinder 12A goes into the intake stroke is a starting point, a sequence of successive strokes (intake, compression, expansion and exhaust) of the individual cylinders 12A-12D is as shown in Table 1 below.

**Table 1**

| Cylinder No. | Strokes | | | |
|---|---|---|---|---|
| 1st cylinder | Intake | Compression | Expansion | Exhaust |
| 2nd cylinder | Compression | Expansion | Exhaust | Intake |
| 3rd cylinder | Exhaust | Intake | Compression | Expansion |
| 4th cylinder | Expansion | Exhaust | Intake | Compression |

In this embodiment, the first and second branching intake ducts 43A and 43B are arranged such that inlets thereof can face the opening 52 in the rotary valve 50 with a specific phase difference so that the inlet of the first branching intake duct 43A is located on a downstream side while the inlet of the second branching intake duct 438 is located on an upstream side with respect to the rotating direction of the rotary valve 50. Similarly, the third and fourth branching intake ducts 43C and 43D are arranged such that inlets thereof can face the opening 53 formed in the rotary valve 50 with the same specific phase difference so that the inlet of the third branching intake duct 43C is located on the downstream side while the inlet of the fourth branching intake duct 43D is located on the upstream side with respect to the rotating direction of the rotary valve 50.

More specifically, the first branching intake duct 43A connected to the first cylinder 12A and the second branching intake duct 43B connected to the second cylinder 128 are joined to the surge tank 42 at positions where the inlets of the first and second branching intake ducts 43A and 43B can face the front opening 52 with a phase difference of 90 degrees and the inlet of the second branching intake duct 43B is located on the upstream side with respect to the rotating direction of the rotary valve 50. Also, the third branching intake duct 43C connected to the third cylinder 12C and the fourth branching intake duct 43D connected to the fourth cylinder 12D are faced to the rear opening 53 with a phase difference of 90 degrees so that the inlet of the third branching intake duct 43C is located on the upstream side with respect to the rotating direction of the rotary valve 50 and the first and fourth branching intake ducts 43A and 43D (and thus the second and third branching intake ducts 43B and 43C) are located in the same phase, that is, at the same angular position in a circumferential direction of the surge tank 42.

With the aforementioned arrangement, the first to fourth branching intake ducts 43A-43D can be on/off air flows with specific timing regardless the engine speed. This arrangement also serves to equalize the lengths of the individual branching intake ducts 43A-43D and reduce overall dimensions of the branching intake ducts 43A-43D. After all, the arrangement of the embodiment configures the air intake system featuring a quick response to a demand for torque acceleration with the shortest intake passage PH11-PH14. Also, as stated earlier, the width SL of the surge tank 42 along the cylinder bank direction is shorter than the overall width DL of the branching intake ducts 43A-43D at outlets thereof along the cylinder bank direction. On the other hand, the inlets of the branching intake ducts 43A-43D connected to the surge tank 42 are in closer proximity than outlets as can be seen from FIG. 1. This arrangement of the embodiment helps to provide an extremely high-speed response to the demand for acceleration of engine at the greatest extend.

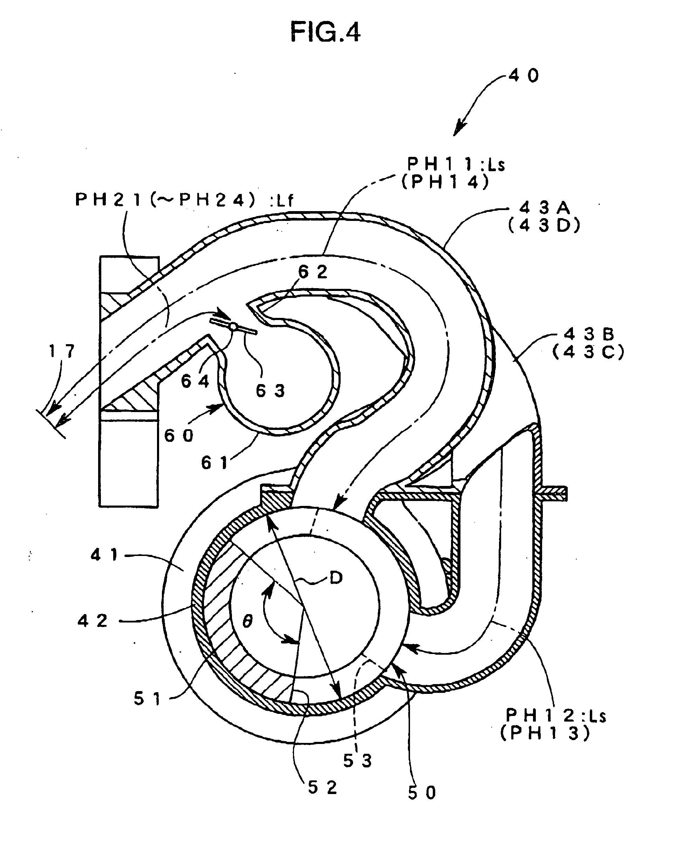

FIG. 4 is an enlarged cross-sectional view schematically showing a principal part of FIG. 2.

As shown in FIG. 4, the rotary valve 50 has an outer diameter D larger than the inner diameter of each of the branching intake ducts 43A-43D. Therefore, the branching intake ducts 43A-43D are caused in fluid communication with the corresponding openings 52 and 53 for shorter periods of time as the rotary valve 50 rotates in synchronism with the crankshaft 3. Also, since this intake system 40 is configured to draw in the air through the branching intake ducts 43A-43D when the openings 52 and 53 in the outer curving wall of the rotary valve 50 face the inlets of the corresponding branching intake ducts 43A-43D, the intake system 40 of the embodiment serves to prevent the air pulsation and reduce abnormal noise.

In this embodiment, has a valve closing angle θ between the two openings 52 and 53 is set to 120 degrees, for example. Thus, if the valve opening timing is set in an earlier half portion of each intake stroke, the surge tank 42 is also held disconnected from a particular cylinder by the rotary valve 50 even when the intake port 17 of that cylinder is opened by the pertinent intake valve 19. Therefore, a vacuum is generated in corresponding one of the branching intake ducts 43A-43D by the intake stroke of the pertinent cylinder until the rotary valve 50 opens an intake the air channel to the cylinder.

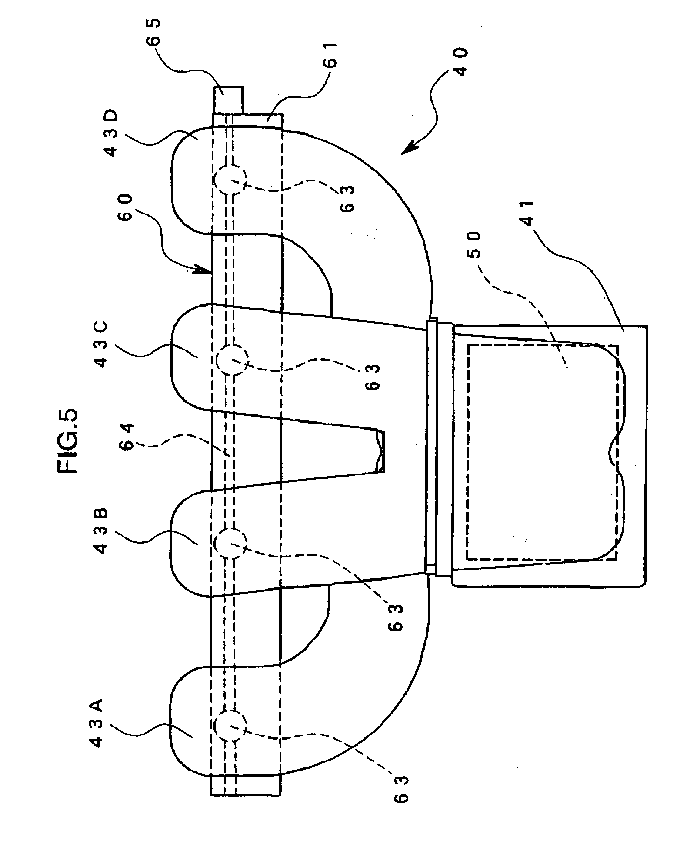

FIG. 5 is an enlarged fragmentary view showing a principal part of FIG. 1.

Referring to FIGS. 4 and 5, the branching intake ducts 43A-43D are associated with a variable induction system (VIS) 60 which works as an intake duct length varying system including the volume channel 61 serving as the air cavity portion extending parallel to the crankshaft 3, joint ducts 62 which connect the individual branching intake ducts 43A-43D to the volume channel 61, and VIS valves 63 serving as a valve mechanism for on/off flow control of the individual joint ducts 62. As illustrated in FIGS. 4 and 5, the volume channel 61 is a component which also serves as an interconnection passageway for interconnecting the individual branching intake ducts 43A-43D. The individual VIS valves 63 are mounted on a common drive shaft 64 to which a VIS valve actuator 65 is connected for simultaneously opening and closing the VIS valves 63.

Referring to FIG. 4, an intake duct length Lf from an outlet of the corresponding intake port 17 to the volume channel 61 is set to a length which is determined by the intake duct volume defined by each intake passage PH 21-24 from the outlet of the corresponding intake port 17 to the volume channel 61 and a single-dispiaced cylinder volume so that the a natural frequency of air intake system is tuned to resonate at a high-speed range R3 at which engine speed reaches at least a first specified engine speed Nf (e.g., 4500 rpm) in order to achieve the dynamic supercharging effect (inertial supercharging effect in this embodiment) which enhances the volumetric efficiency at the high-speed range R3. On the contrary, an intake duct length Ls from an outlet of the corresponding intake port 17 to the rotary valve 50 is set to a length which is determined by the intake duct volume defined by each intake passage PH 11-14 from the outlet of the corresponding intake port 17 to the rotary valve 50 and a single-displaced cylinder volume so that the a natural frequency of air intake system is tuned to resonate at an medium-speed range R2 at which engine speed reaches at most a second specified engine speed Ns (e.g., 3700 rpm) in order to achieve the dynamic supercharging effect (inertial supercharging effect in this embodiment) which enhances the volumetric efficiency at the medium-speed range R2. As a consequence, when the VIS valve actuator 65 opens the VIS valve 63, each of the branching intake ducts 43A-43D has a natural frequency corresponding to the first specified engine speed Nf, causing the intake air to oscillate at a resonance frequency and thereby producing an increased effect of inertial supercharging at the high-speed range R3. When the VIS valve actuator 65 closes the VIS valve 63, on the other hand, each of the branching intake ducts 43A-43D has a natural frequency corresponding to the second specified engine speed Ns, causing the intake air to oscillate at a resonance frequency and thereby producing an increased effect of inertial supercharging at the medium-speed range R2.

As shown in FIG. 2, the engine 10 is provided with a pair of crank angle sensors 66 serving as an engine speed sensor. The two crank angle sensors 66 are installed in a surrounding area of the crankshaft 3 with a specific phase difference from each other. The engine speed is detected based on a sensing signal output from one of the crank angle sensors 66. The rotating direction and angular position of the crankshaft 3 are detected based on sensing signals output from the two crank angle sensors 66. Additionally, the engine 10 is provided with an water temperature sensor 67 which detects the temperature of engine cooling water for judging operating conditions of the engine 10, an accelerator pedal position sensor 68 used as an engine load sensor, and an O₂ sensor 69 which detects the concentration of oxygen contained in exhaust gas discharged through the exhaust ports 18. The engine 10 is further provided with an exhaust gas recycled (EGR) system 70 by which the fraction of exhaust gases are recycled to the intake ports 17.

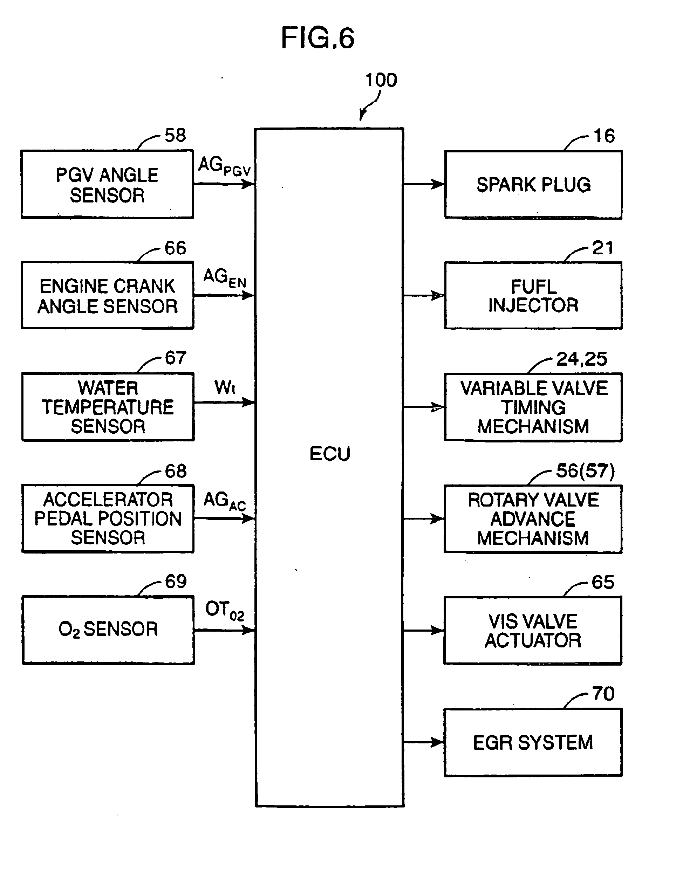

FIG. 6 is a block diagram of the engine 10 of the present embodiment.

Referring to FIG. 6, an electronic control unit (ECU) 100 including a microprocessor, a memory, and an input section and an output section performs overall control of the engine 10. Input devices connected to the input section of the ECU 100 are the PGV angle sensor 58 which detects the phase of the rotary valve 50, the crank angle sensor 66, the water temperature sensor 67, the accelerator pedal position sensor 68 and the O₂ sensor 69 or the like. ECU 100 receives various signals AG_{PCV}, AG_{EN}, Wt, AG_{AC}, and OT_{O2} from these sensors 58, 66, 67, 68, and 69 respectively. Output devices connected to the output section of the ECU 100 are the spark plugs 16, the fuel injectors 21, the variable impulse charge mechanisms 24, 25 for varying the opening and closing timings of the intake and exhaust valves 19 and 20, the rotary valve advance mechanism 56 (more specifically, the oil control valve system 57), the VIS valve actuator 65 and the EGR system 70 or the like.

Now, a control map stored in the memory of the ECU 100 is described.

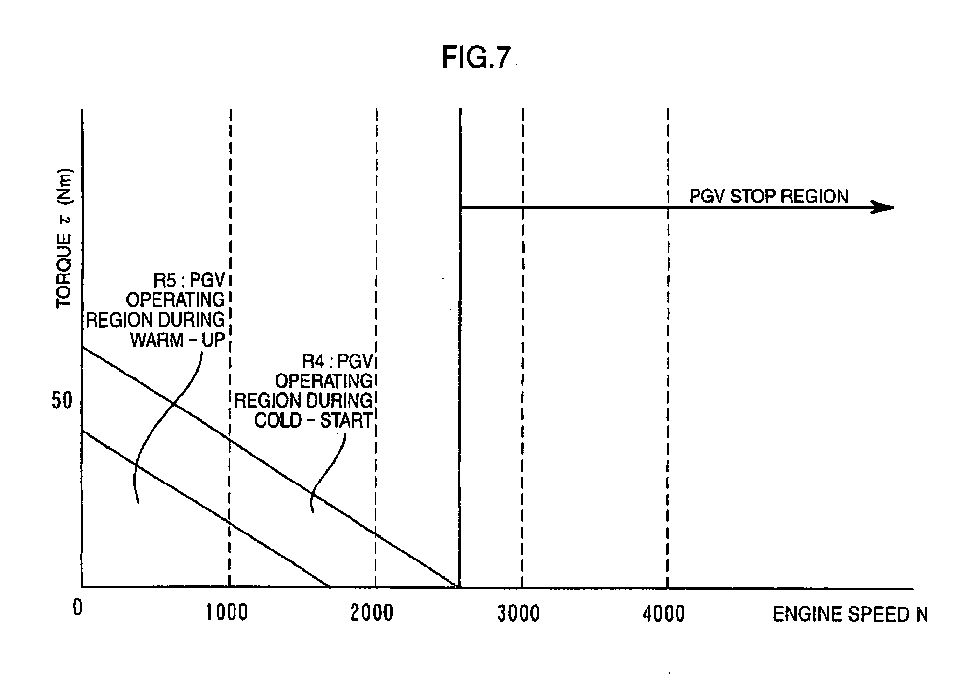

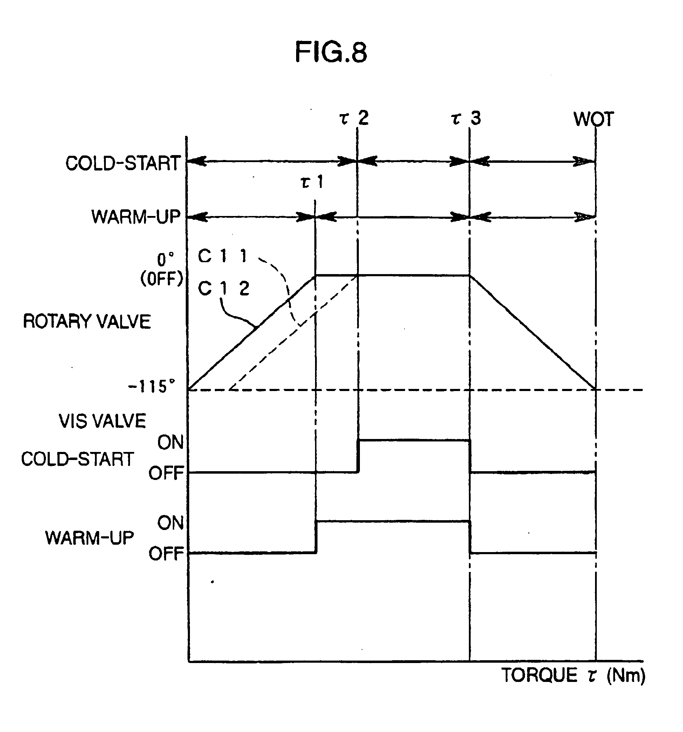

FIG. 7 is a graph showing a relationship between the engine torque and the engine speed, and FIG. 8 is a graph showing a relationship between the phase of the rotary valve 50 and the engine torque together with a relationship between on/off operation of the VIS valves 63 and the engine torque in a low-speed range of the engine 10.

Referring to FIGS. 7 and 8, the ECU 100 is programmed such that the temperature of the engine cooling water detected by the water temperature sensor 67 is taken as representing cylinder temperature of the engine 10, the engine 10 is judged to be in a cold-start when the temperature detected by the water temperature sensor 67 is lower than a preset cylinder temperature Wt1 while the engine 10 is judged to be warm-up when the temperature detected by the water temperature sensor 67 is at least the preset cylinder temperature Wt1, and an operating range R4 of the rotary valve 50 selected during cold-start (PGV operating range under cold-start) extends beyond an operating range R5 of the rotary valve 50 selected during warm-up (PGV operating range under warm-up) in this embodiment. As is apparent from FIG. 7, the operating range R5 of the rotary valve 50 selected in the engine warm-up is set to extend up to an engine speed N of approximately 1500 rpm, whereas the operating range R4 of the rotary valve 50 selected at engine cold-start is set to extend beyond the operating range R5 up to an engine speed N of approximately 2500 rpm depending on engine load conditions. Therefore, the variable induction system 60 is controlled such that the VIS valves 63 connect the volume channel 61 to the branching intake ducts 43A-43D at an engine torque τ2 during cold-start and at an engine torque τ1 during warm-up on a lower load side, where the torque τ2 is higher than the torque τ1.

As an arrangement for evaluating activeness of the exhaust gas catalytic converter, the ECU 100 is so programmed as to use the temperature Wt of the engine cooling water detected by the water temperature sensor 67 as a temperature for judging the activeness of the exhaust gas catalytic converter, and judges that the exhaust gas catalytic converter is in an inactive temperature state when the temperature Wt detected by the water temperature sensor 67 is lower than a preset cylinder temperature (inactive catalyst temperature) and that the exhaust gas catalytic converter is in an active temperature state when the temperature Wt detected by the water temperature sensor 67 is at least the preset cylinder temperature. Alternatively, the activeness of the exhaust gas catalytic converter may be judged based on a combination of the temperature Wt of the engine cooling water detected by the water temperature sensor 67 and time elapsed after engine start or by directing measuring the temperature of the exhaust gas catalytic converter.

In this embodiment, the operating range R5 in which the rotary valve 50 is operated is set even during warm-up as indicated in FIG. 7, so that the rotary valve 50 can be effectively used for accelerating vaporization and atomization of fuel and thereby Improving combustion stability in addition to increasing engine torque.

As is apparent from FIG. 8, the VIS valves 63 are closed and the rotary valve 50 is operated on a higher load side (i.e., in a region of a torque τ3 and above) of the low-speed range of the engine 10. Accordingly, at a low-speed and low-load region at which great importance is placed on fuel evaporability and at a low-speed and high-load region at which high output performance of the engine 10 is required, the rotary valve 50 is operated to provide improved combustion stability and volumetric efficiency, whereas, at a low-speed and medium-load region at which such requirements are relatively less imposed, the VIS valves 63 are opened to obtain engine output while improving fuel economy by an dynamic supercharging effect through the branching intake ducts 43A-43D.

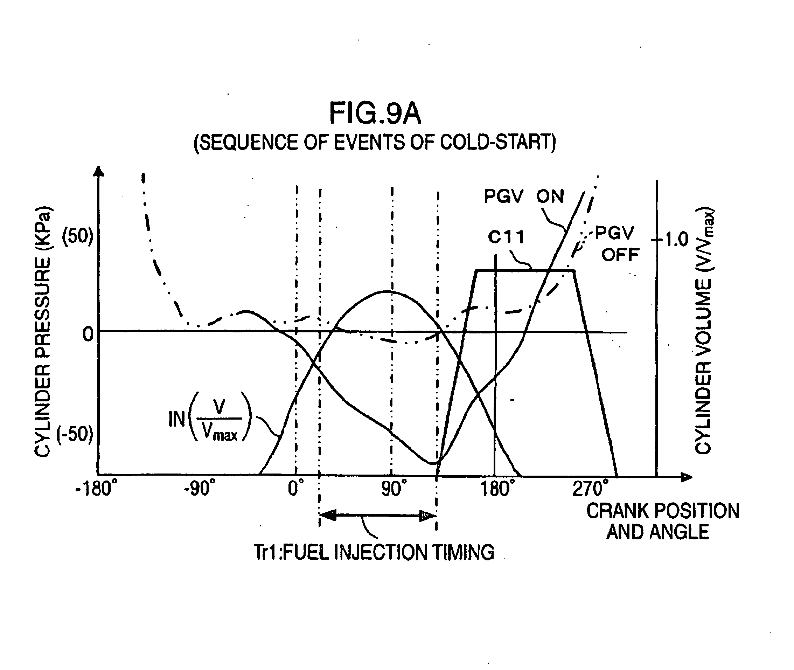

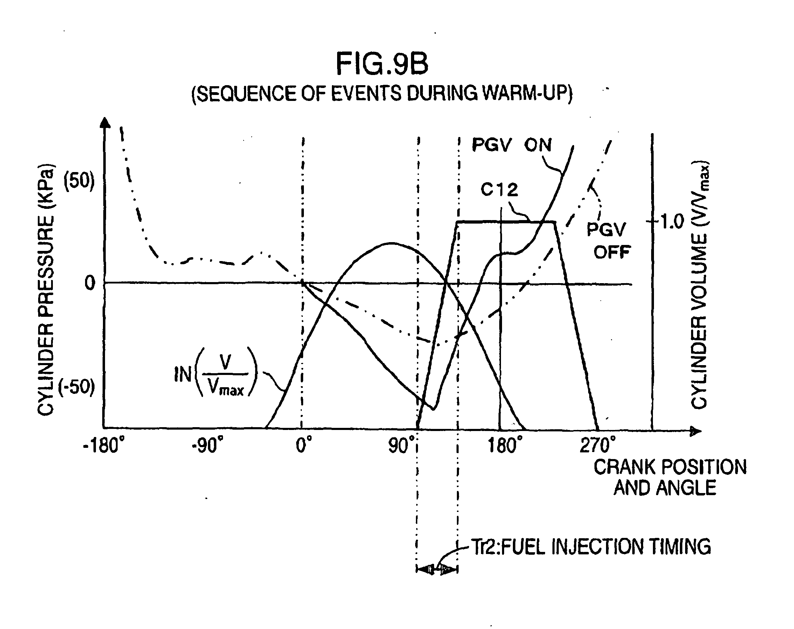

FIG. 9A is a graph showing a relationship between cylinder pressure and crank angle at engine cold-start, and FIG. 9B is a graph showing a relationship between cylinder pressure and crank angle in the engine warm-up. Designated by "C11" and "C12" in FIGS. 9A and 9B are on/off operations of the rotary valve 50 during cold-start and engine warm-up, respectively. In FIGS. 9A and 9B, "IN" designates characteristic of intake valves 19 which is also shown cylinder volume ratio V/Vₘₐₓ.

Referring to FIGS. 9A and 9B, the fuel injectors 21 are controlled to inject the fuel during a fuel injection period Tr1 during cold-start and during a fuel injection period Tr2 during warm-up in the present embodiment.

Specifically, the fuel injectors 21 are controlled to inject the fuel in an early part of each intake stroke before the rotary valve 50 opens when the engine 10 is during cold-start, and at about the opening timing (preferably immediately after the opening timing) of the rotary valve 50 when the engine 10 runs during warm-up.

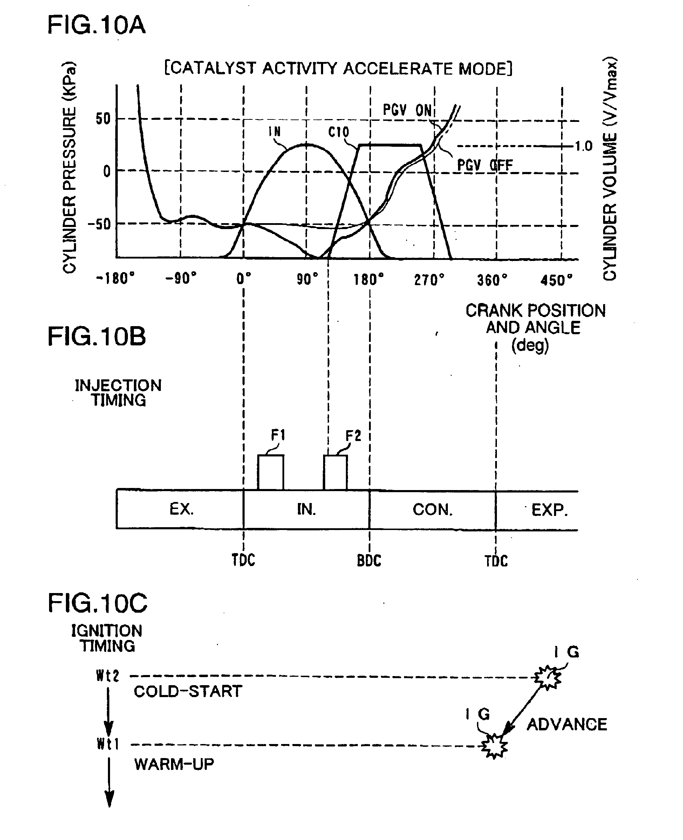

FIGS. 10A to 10C show timing charts of rotary valve, injection, and ignition timings in so called first idle state in which engine starts at run.

Referring to FIGS.10A to 10C, in the first idle state in which engine starts at run, catalyst activity accelerate mode will be conducted by ECU 100. In order to attain the catalyst activity accelerate mode, this embodiment employs a detected temperature Wt of the engine cooling water sensor 67. ECU 100 judges whether or not engine condition is in catalyst active state by comparing the detected temperature Wt to preset temperature (catalyst active state temperature) Wt2. ECU 100 judged to be catalyst deactivate state when the detected temperature Wt reaches low temperature below the preset temperature Wt2 while to be catalyst activate state when the detected temperature Wt reaches high temperature at least preset temperature Wt2. In the judgment whether or not the exhaust gas catalytic converter is in active, water temperature detection is utilized together with a driving period of time. Similarly, the temperature of catalytic converter directly detected is also utilized. In the catalyst deactivate state, in which the detected temperature Wt is below to Wt2, ECU 100 controls the rotary valve 50 to be the most retarded phase and the ignition timing to delay the limited delay range. By driving rotary valve 50 with the most retarded phase, the large negative pressure can be utilized so that the fuel vaporization and atomization can be accelerated, thereby improving the combustion stability and improving emission characteristics due to the expansion of delay timing limitation of the spark plug 16.

Next, in addition to cold-start injection timing Tr1 aforementioned with reference in FIG. 9A, the injection timing in catalyst activity accelerate mode is preferably in a multispray fashion, such as timings F1 and F2. In the anterior half timing F1 is basically set to be injected at a point in which the intake valve 17 is opening in each intake stroke each cycle. The posterior half timing F2 is preferably set to be injected at a point in which the rotary valve 50 is about to open ( more specifically the injection starts at immediately before the rotary valve 50 is open and stops after the rotary valve 50 is opening). These arrangements enable to improve fuel vaporization ratio to a large extent by the negative pressure caused by the rotary valve 50.

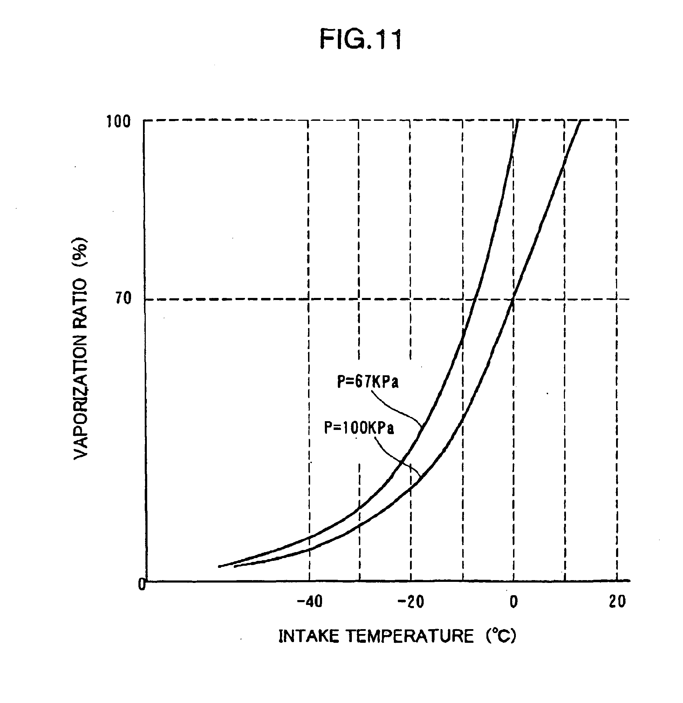

FIG. 11 is a graph showing vaporization ratio to intake temperature.

Referring to FIG. 11, the vaporization ratio of fuel about 100KPa is 100 % in 20 Celsius. The ratio however reduces to 70 % when the temperature drops down to 0 Celsius. On the contrary, vaporization ratio of gasoline which drops down to 67 KPa still keeps 98 % even if the temperature drops down from 20 Celsius to 0 Celsius. Accordingly, pressure down is advantageous in maintaining the high vaporization ratio despite of some shortcoming of cold-start.

Furthermore, it is advantageous to set the posterior element of fuel to be injected at a timing of rotary valve opening because the fuel injected is forced into the cylinders 12A-12D by a flow of intake the air accelerated by the rotary valve 50 so that the fuel is efficiently introduced into the cylinders 12A-12D and well mixed with fresh the air.

Employing the fuel injection characteristics aforementioned with reference in FIGS. 10A and 10B, limitation of ignition delay can be in wide range: for instance, 20 degree after compression TC of crank angle. Furthermore, in this embodiment, the opening timing or impulse charging timing of the rotary valve 50 is advanced as rising the detected cylinder temperature Wt, provided that the detected cylinder temperature Wt reaches to a preset cylinder temperature Wt2 (that is cold-start). This enables to attain well balance between the fuel economy and emission characteristics and at the same time, accelerating the engine condition to be warm-up by delaying the ignition timing within the latest delay limitation to ignite mixture of fuel and fresh air. The ignition timing is delayed as advancing the rotary valve opening timing during cold-start. This likewise contributes well balance between the fuel economy and emission characteristics.

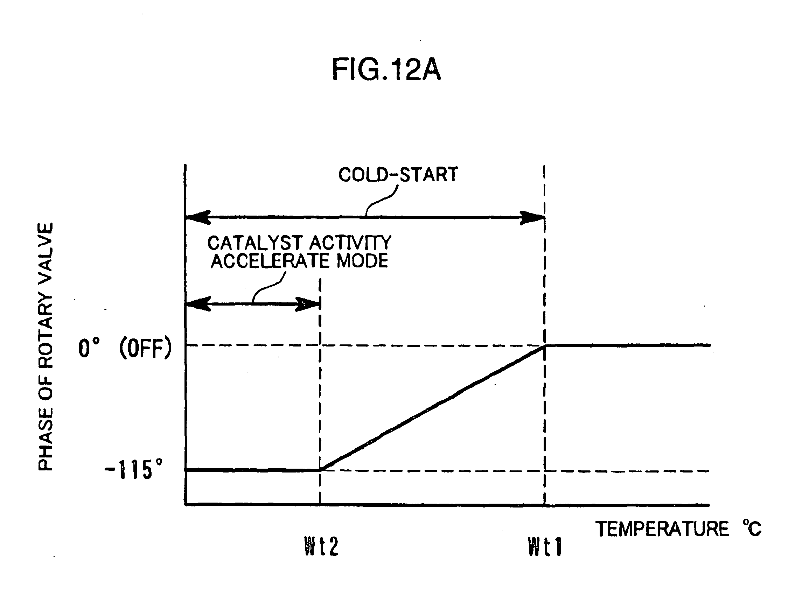

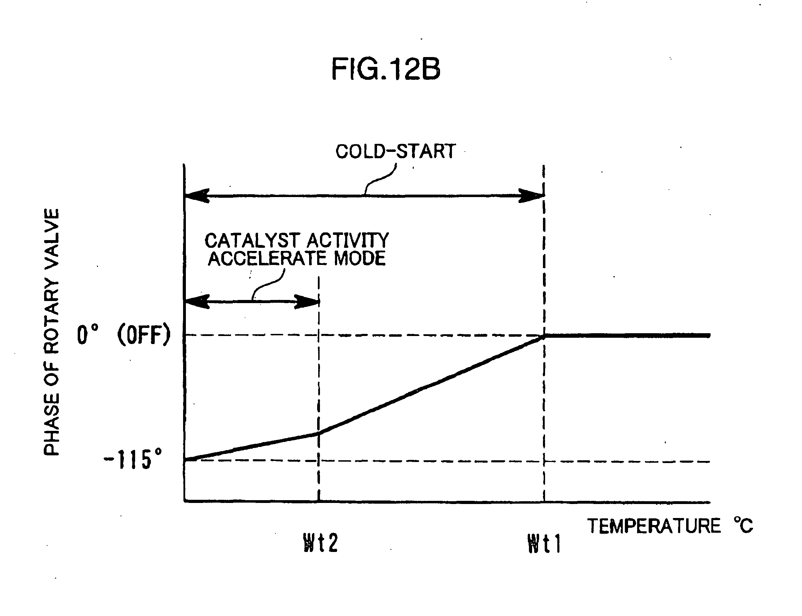

FIGS. 12A and 12B are timing charts showing the relationship between the phase of rotary valve and temperature.

Referring to FIGS. 12A and 12B, a catalyst activity accelerate mode is conducted by ECU 100 in which it is preferable to fix the opening timing of the rotary valve 50 to the most retarded phase in order to expand the retard limitation. The rotary valve 50 may be advance with rising the temperature as is shown in FIG. 12B in case the catalyst activity accelerate mode is predicted to be shorten period of time or the detected temperature Wt is relatively close to catalyst active state temperature Wt2.

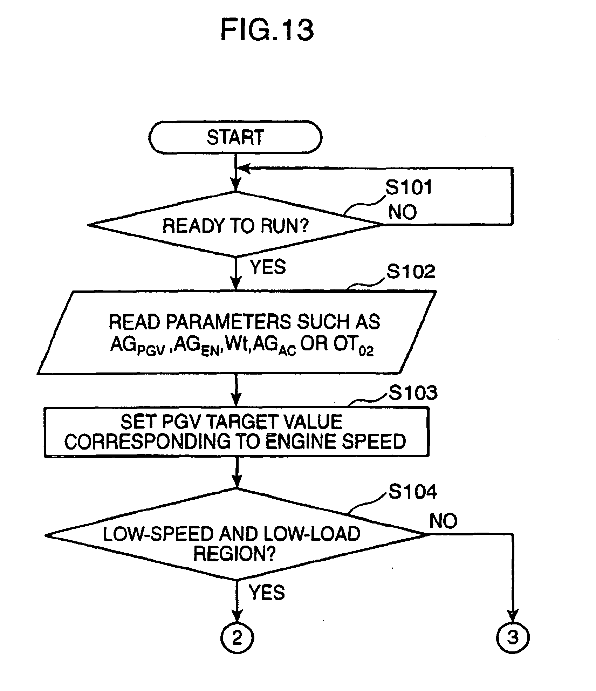

Now, control operation performed by the ECU 100 of the engine 10 of the present embodiment which is set to operate as shown in FIGS. 7 to 9A/9B is now described with reference to a flowchart of FIGS. 13 to 15.

As in the first embodiment discussed with reference to FIG. 9, the ECU 100 sets a target value for the rotary valve 50 upon engine start (steps S101, S102, S103) and, then, the ECU 100 judges whether the engine 10 is currently at the low-speed and low-load region (step S104) as shown in FIG. 13.

Referring to FIG. 13, immediately after the engine 10 is started (step S10101), the ECU 100 reads AG_{PGV}, AG_{EN}, Wt, AG_{AC}, and OTₒ₂ from the sensors 58, 66, 67. 68, and 69 connected to the input section of the ECU 100 (step S102).

Based on these sensing signal values, the ECU 100 sets a target value for the rotary valve 50 which works as the impulse generating valve (step S103). In this embodiment, the rotary valve 50 is set at a phase corresponding to a most advanced angular position (i.e., an OFF state) at engine start. The. ECU 100 controls the oil control valve system 57 of the rotary valve advance mechanism 56 to determine the opening timing of the rotary valve 50 in this condition, the rotary valve 50 is set such that the opening timing of the rotary valve 50 is most retarded with respect to opening timing of the intake valves 19 in lower speed regions and the opening timing of the rotary valve 50 is progressively advanced and approaches the opening timing of the intake valves 19 as the engine speed N increases.

Next, the ECU 100 determines whether or not the engine condition is low-speed and low-load region (step S104).

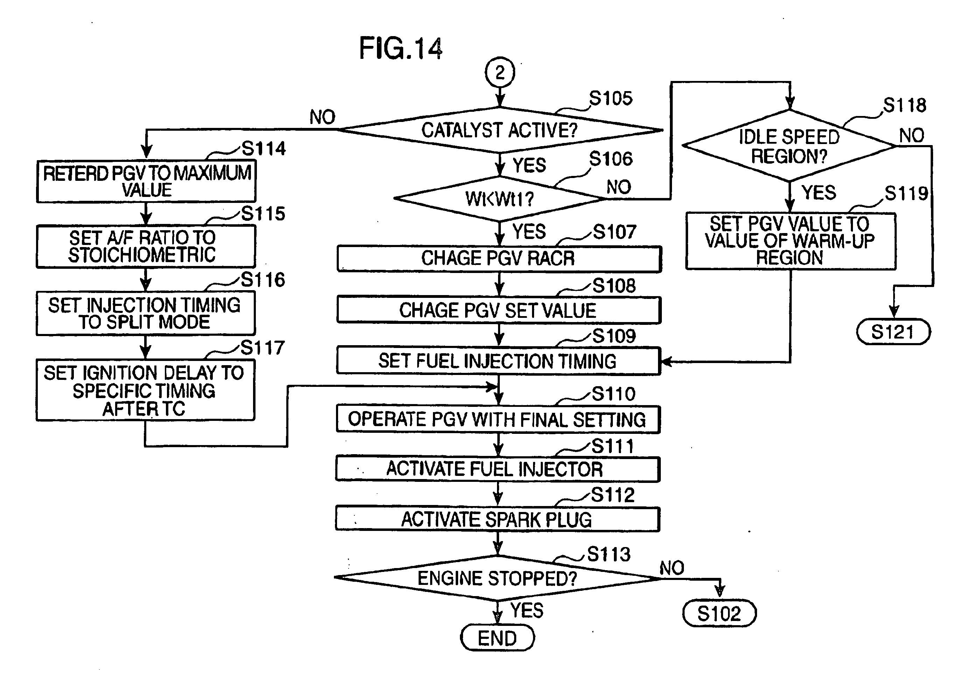

Referring to FIG. 14, if the engine 10 is judged to at currently run at the low-speed and low-load region, the ECU 100 evaluates the activeness of the exhaust gas catalytic converter (not shown) based on the sensing signal value of the water temperature sensor 67 which is used as a device for sensing the activity of the exhaust gas catalytic converter (step S105). If the exhaust gas catalytic converter is judged to have good activity, the ECU 100 judges whether the temperature Wt detected by the water temperature sensor 67 is lower than the preset cylinder temperature Wt1, that is, whether the engine 10 is during cold-start (step S106). If the engine 10 is judged to be currently during cold-start, the ECU 100 varies a retardation angle correction region (RACR) of the rotary valve 50 according to the detected temperature Wt (step S107), and further varies set values for the rotary valve 50 according to the detected temperature Wt (step S108). Steps S106 and S107 are performed based on a control map stored in the ECU 100 using data obtained from results of experiments conducted beforehand, for instance.

Then, based on a control map represented by the graphs of FIGS. 9A and 9B, the ECU 100 sets a fuel injection timing and period of time (step S109). Since the engine 10 is currently during cold-start, the ECU 100 sets the fuel injection period Trl for cold-start shown in FIG. 9A. In this condition, ignition timing is retarded in accordance with settings made in steps S109 and S110.

Then, the ECU 100 operates the rotary valve 50 in accordance with settings made in steps S107 and S108 (step S110). Subsequently, the ECU 100 causes the fuel injectors 21 to inject the fuel in accordance with the setting made in step S109 (step S111). Since the fuel is injected during the fuel injection period Trl for cold-start shown in FIG. 9A in this operation flow, fuel vaporization and atomization are accelerated by impulse charging by the rotary valve 50 during cold-start at which the engine 10 exhibits low combustion stability. This serves to improve overall combustion stability and emissions characteristics of engine.

After the fuel injection the air-fuel mixture which has been well mixed by the rotary valve 50 is ignited at a specified time to develop the engine torque (step S112).

After execution of spark ignition the ECU 100 returns to step S102 and re-executes the aforementioned sequence of the control operation until the engine 10 is stopped (step S113).

If the ECU 100 judges that activation of the exhaust gas catalytic converter is insufficient in step S105, the ECU 100 sets the opening timing of the rotary valve 50 to maximum retardation (step S114).

Subsequently, the ECU 100 sets the air/fuel ratio equal to the stoichiometric air/fuel ratio in order to improve emission characteristics (step S115). Next, the ECU 100 switches the engine 10 to a split fuel injection mode in which fuel injected by the fuel injectors 21 divided into two elements to create greater energy (step S116). Then, the ECU 100 sets the ignition delay to specific timing after compression TC (step S117), and proceeds to step S110 onward.

As a result of this operation flow, the rotary valve 50 opens with the maximum retardation from the opening timing of the intake valves 19 when step S110 is executed, so that a large negative pressure is created in each cylinder 12A-12D each intake stroke until the rotary valve 50 opens.

Also, when step S111 is executed with the setting made in step S116 above, the injected fuel metered to be the stoichiometric air/fuel ratio is divided into two elements each intake stroke.

Further, when step S112 is executed with the setting made in step S117 above, each spark plug 16 ignites the mixture under conditions where the ignition timing is much delayed. As a result, a relatively large amount of exhaust gas energy is created and the temperature of the exhaust gas catalytic converter rapidly increases, making it possible to activate the exhaust gas catalytic converter in a short time.

Next, if the cylinder temperature of the engine 10 reaches warm-up region in step S106 after the exhaust gas catalytic converter has been activated, the ECU 100 judges whether the engine speed N is currently at an idle speed range (step S118). If the engine speed N is at the idle speed range, the ECU 100 sets operating conditions of the rotary valve 50 in accordance with values of warm-up shown in FIGS. 7 and 8 (step S119). Upon completion of step S119, the ECU 100 proceeds to step S109.

Since the engine 10 is currently during warm-up, the ECU 100 sets the fuel injection period Tr2 for warm-up shown in FIG. 9B. In this condition, the ignition timing is advanced to a point close to the compression stroke TC.

Subsequently, the ECU 100 operates the rotary valve 50 under the operating conditions set for warm-up (step S110), causes the fuel injectors 21 to inject the fuel at a point immediately after the rotary valve 50 begins to open (step S111), and causes the fuel injectors 21 to ignite the mixture (step S112). Therefore, the fuel injected immediately before impulse charging is forced into the cylinders 12A-12D by a flow of intake the air. As a result, the fuel is efficiently introduced into the cylinders 12A-12D and well mixed with fresh the air, wherein the fresh the air is cooled by absorption of latent heat by vaporization of the fuel. Accordingly, even when the air/fuel ratio is increased to enrich the mixture under high-load conditions, it is possible to prevent the fuel from adhering to walls of the intake ducts and enhance a knocking avoidance effect achieved by the latent heat absorption.

If the engine speed N is judged to be exceeding the idle speed range in step S118, the ECU 100 proceeds to step S121 onward discussed below.

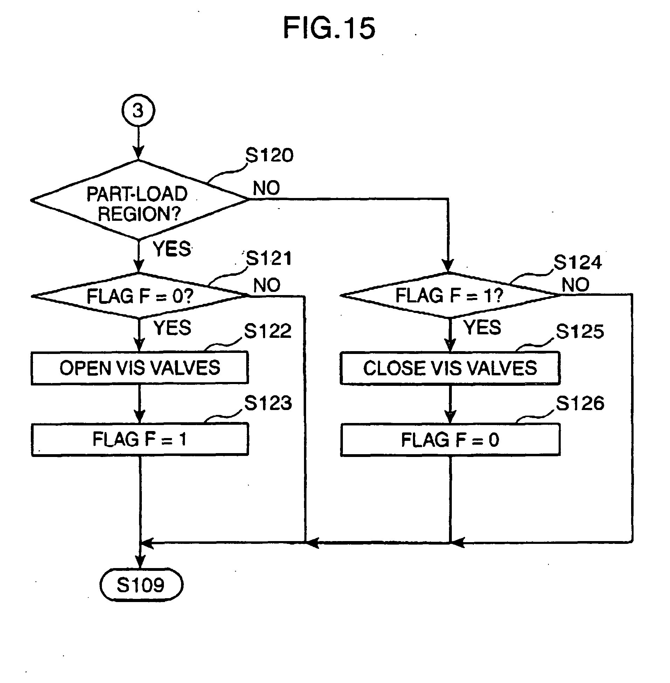

Referring to FIG. 15, if the engine 10 is judged to be currently not at the low-speed and low-load region in step S104 of FIG. 13, the ECU 100 determines whether the engine 10 is at the part-load region (step S120). If the engine 10 is judged to be currently at the part-load region, the ECU 100 makes reference to the flag F by which the VIS valves 63 are actuated (step S121). If the value of the flag F is "0" in step S121, the ECU 100 opens the VIS valves 63 (step S122) and switches the flag F to "1" (step S123). Then, the ECU 100 proceeds to step S109 of FIG. 14. If the value of the flag F is "1" in step S121, the ECU 100 proceeds directly to step S109 of FIG. 14.

If the engine 10 is judged to be currently at the wide open throttle, on the other hand, the ECU 100 judges whether the value of the flag F is "1" (step S124). If the value of the flag F is "1", the ECU 100 causes the VIS valves 63 to close (step S125) and switches the flag F to "0" (step S126). Then, the ECU 100 proceeds to step S109 of FIG. 14. If the value of the flag F is "0", the ECU 100 proceeds directly to step S109 of FIG. 14.

In this embodiment, if the engine 10 is in a medium-load region when the engine 10 is running at a low speed, that is, the low-speed and medium-load region, the rotary valve 50 is caused to stop operating. This reduces pumping loss caused by the rotary valve 50 and thereby improving fuel economy at the low-speed and medium-load region. At the low-speed and low-load region, on the other hand, a particularly large negative pressure is created in the intake ducts due to impulse charging by the rotary valve 50. This results in improved fuel evaporability and fuel-air mixability, serving thereby improving overall combustion stability and emissions characteristics of engine. Further, at the low-speed and high-load region, the volumetric efficiency includes in high level and improves output performance of the engine 10 due to impulse charging by the rotary valve 50.

In this embodiment, the engine 10 is provided with the water temperature sensor 67 used as the device for sensing the activity of the exhaust gas catalytic converter and the rotary valve 50 is operated in all load conditions until the ECU 100 detects that the exhaust gas catalytic converter has been activated. Until the exhaust gas catalytic converter is sufficiently activated after engine start, priority is given to emission characteristics rather than to fuel economy in this embodiment. Therefore, the rotary valve 50 is operated to charge the impulse and supercharge the engine 10 in such an operating condition regardless of engine load conditions. Consequently, a large negative pressure is created in the cylinders 12A-12D and fuel vaporization and atomization are accelerated, resulting in an improvement in combustion stability and emissions characteristics of engine, under conditions where the exhaust gas catalytic converter is not sufficiently activated.

In this embodiment, the engine 10 is provided with the water temperature sensor 67 used as a device which detects the cylinder temperature of the engine 10 and the ECU 100 operates the rotary valve 50 at the low-speed range R1 in which the temperature Wt of the engine cooling water detected by the water temperature sensor 67 is lower than the preset cylinder temperature Wt1. With this arrangement, the fuel evaporability is improved by the impulse charged by the rotary valve 50 at engine cold-start at which both the fuel evaporability and the combustion stability normally deteriorate. It is therefore possible to achieve high combustion stability at engine cold-start.

As previously discussed with reference to the flowchart of FIG. 14, the ECU 100 of the engine 10 of this embodiment is so programmed as to progressively retard the opening timing of the rotary valve 50 as the temperature Wt of the engine cooling water detected by the water temperature sensor 67 decreases. For this reason, it is possible to create a progressively larger negative pressure and increase the fuel evaporability in the cylinders 12A-12D as the detected cooling water temperature Wt decreases at engine cold-start in which it is necessary to increase the combustion stability. It is therefore possible to accelerate fuel vaporization and atomization and thereby improving the combustion stability during cold-start.

As previously discussed with reference to the graph of FIG. 7, the ECU 100 of the engine 10 of this embodiment is so programmed as to drive the rotary valve 50 up to a higher engine speed during cold-start of the rotary valve 50 than during warm-up in a controlled fashion. Thus, the rotary valve 50 charges the impulse up to a relatively higher engine speed during cold-start at which the engine 10 exhibits poor combustion stability. This arrangement of the embodiment serves to accelerate fuel vaporization and atomization and thereby improving the combustion stability over a wide operating range of the engine 10.

Also, the ECU 100 of the engine 10 of this embodiment is so programmed as to operate the rotary valve 50 when the engine speed N is at the idle speed range during warm-up at which the detected temperature Wt of the engine cooling water is higher than the preset cylinder temperature Wt1. This arrangement of the embodiment makes it possible to increase flow speed of intake the air during idle operation during warm-up at which it is necessary to increase the combustion stability as the rotary valve 50 charges the impulse. Consequently, the fuel is forced into the cylinders 12A-12D by the fast intake flow, thereby accelerating fuel vaporization and atomization and improving the fuel-air mixability.

Also, as previously discussed with reference to FIGS. 9A and 9B, the ECU 100 of the engine 10 of this embodiment is programmed to control the engine 10 such that the fuel injectors 21 inject the fuel in the early part of each intake stroke before the rotary valve 50 opens when the engine 10 is during cold-start and at about the opening timing of the rotary valve 50 when the engine 10 runs during warm-up. Therefore, at engine cold-start in which it is necessary to increase the fuel evaporability, it is possible to inject the fuel at a time when the cylinder pressure is high, or in the early part of each intake stroke before the rotary valve 50 opens, thereby accelerating fuel vaporization and atomization by the impulse charged by the rotary valve 50. In the engine warm-up, the fuel injectors 21 inject the fuel at about the opening timing of the rotary valve 50, that is, immediately before the impulse is charged, so that the fuel is forced into the cylinders 12A-12D by the fast flow of intake the air. Consequently, the fuel is efficiently introduced into the cylinders 12A-12D and well mixed with fresh the air, so that the fuel-air mixability is improved and the fresh the air is cooled by absorption of the latent heat by vaporization of the fuel. Accordingly, even when the air/fuel ratio is increased to enrich the mixture under high-load conditions, it is possible to prevent the fuel from adhering to the walls of the intake ducts and enhance the knocking avoidance effect achieved by the latent heat absorption. It is therefore possible to control fuel injection in a desirable manner according to engine temperature in the present embodiment.

Also, as previously discussed with reference to FIG. 8, the ECU 100 of the engine 10 of this embodiment is so programmed as to control the rotary valve advance mechanism 56 such that the opening timing of the rotary valve 50 is progressively advanced as the engine load approaches a threshold of the medium-load region from the low-load region. As the engine load approaches the threshold (which corresponds to one of the torques τ1 and τ2) for the medium-load region, the opening timing of the rotary valve 50 approaches the opening timing of the intake valves 19 in this embodiment, so that the impulse charged by the rotary valve 50 becomes progressively weaker, making it possible to reduce pumping loss and improve fuel economy on a higher load side within the low-load region.

Additionally, as previously discussed with reference also to FIG. 8, the ECU 100 of the engine 10 of this embodiment is so programmed as to control the rotary valve advance mechanism 56 such that the opening timing of the rotary valve 50 is progressively retarded as the engine load approaches the wide open throttle at the high-load region. As the engine 10 transfers to the higher load side where a higher engine output is required, the opening timing of the rotary valve 50 goes away from the opening timing of the intake valves 19 in this embodiment, so that the impulse charged by the rotary valve 50 becomes progressively stronger, making it possible to develop an increased engine output on a higher load side within the high-load region.

Furthermore, the engine 10 of the present embodiment is provided with the variable induction system 60 which includes the volume channel 61 disposed downstream of the rotary valve 50, the volume channel 61 constituting the interconnection passageway for interconnecting the individual branching intake ducts 43A-43D, and the VIS valves 63 serving as the valve mechanism for connecting and disconnecting the volume channel 61 to and from the branching intake ducts 43A-43D under the control of the ECU 100. This arrangement of the embodiment makes it possible to attenuate the impulse charged by the rotary valve 50 and substantially deactivate the rotary valve 50 with the rotary valve 50 rotating as the ECU 100 can activate and deactivate the rotary valve 50 by opening the VIS valves 63 to connect the volume channel 61 to the branching intake ducts 43A-43D while rotating the rotary valve 50.

The aforementioned interconnection passageway (the volume channel 61) for interconnecting the individual branching intake ducts 43A-43D can be modified in various ways.

Although the present invention has been described in terms of specific exemplary embodiments, it will be appreciated that various changes and modifications may be made by those skilled in the art without departing from the scope of the present invention, as defined in the following claims.

## Claims

1. A control apparatus of a multi-cylinder engine which is provided with:
intake ducts (43A-43D) which supply the air through individual intake ports (17) to a plurality of cylinders (12A-12D);
an impulse charger (50) which charges the impulse in each cylinder (12A-12D) at halfway points in each intake stroke during each intake valve (19) is opening the corresponding intake port (17);
engine speed detecting means (66) which detects an engine speed;
engine load detecting means (68) which detects engine load conditions and
control means (100) which controls operation of the impulse charger (50) based on detections by the engine speed and engine load detecting means, **characterised in that**:
the control means (100) operates the impulse charger (50) at a low-speed region at low- and high-load regions except medium-load region at low temperature region including cold-start.

2. A control apparatus of a multi-cylinder engine according to claim 1. which is provided with:
temperature detecting means (67) which detects, as a control parameter, the temperature with respect to cylinder (12A-12D) of the engine (10),
wherein the control means (100) operates the impulse charger (50) to charge the impulse in each cylinder (12A-12D) each cycle during cold-start such that the detected temperature (Wt) is lower than a preset cylinder temperature (Wt1).

3. A control apparatus of engine according to claim 2,
wherein the impulse charger (50) includes a variable impulse charge timing mechanism (56) which is capable of varying an impulse charging timing of the impulse charger (50), wherein the control means (100) controls the variable impulse charge timing mechanism (56) to retard the impulse phase in such a manner that the lower the engine temperature is, the more the impulse charger (50) would retard the impulse phase in each halfway of intake stroke each cycle.

4. A control apparatus of engine according to claim 2 or 3, wherein the control means (100) is so arranged as to drive the impulse charger (50) to charge the impulse in each cylinder (12A-12D) each cycle at engine low-speed and low-load region even when engine runs during warm-up at which the cylinder temperature (Wt)is higher than a preset cylinder temperature (Wt1) while to drive the impulse charger (50) to charge the impulse in each cylinder (12A-12D) each cycle at a region higher-speed during the cold-start.

5. A control apparatus of engine according to one of claims 2 to 4 , wherein the control means (100) operates the impulse charger (50) when engine (10) runs at the idle speed during warm-up, at which the engine temperature is at least a preset cylinder temperature (Wt1).

6. A control apparatus of engine according to one of claims 2 to 5, which is provided with:
fuel injectors (21) for distributed the cylinders (12A-12D) to inject fuels in each cylinder (12A-12D) each cycle under the control of the control means (100),
wherein the control means (100) operates each injector (21) to inject the fuel at each anterior halfway point of intake stroke each cycle prior to the charged impulse during cold-start while to inject the fuel at proximate timing at which impulse charger (50) charges the impulse each cycle during warm-up.

7. A control apparatus of engine according to one of claims 1 to 6, which is provided with:
an interconnection passageway (61) which is positioned at a downstream of the impulse charger (50) and is so connected to the intake ducts (43A-43D) as to interconnect the intake ducts (43A-43D) with each other and
a valve mechanism (63, 64, 65) which alternately opens and closes a joint channel which interconnects the interconnection passageway (61) with the intake ducts (43A-43D) under the control of the control means (100),
wherein the control means (100) opens the valve mechanism (63, 64, 65) to connect the interconnection passageway (61) with the intake ducts (43A-43D) when the engine (10) is in low-speed and at least part-load region.

8. A control apparatus of engine according to one of claims 1 to 7, wherein the impulse charger (50) includes a variable impulse charge timing mechanism(56) which is capable of varying an impulse charging timing of the impulse charger (50), and the control means (100) controls an impulse charging timing through the variable impulse charge timing mechanism(56).

9. A control apparatus of engine according to claim 1 or 8, wherein the impulse charger (50) includes a variable impulse charge timing mechanism (56) which is capable of varying an impulse charging timing of the impulse charger (50), and the control means (100) controls an impulse charging timing through the variable impulse charge timing mechanism(56) in such a manner that the closer the engine load approaches to wide open throttle, the more the impulse charger (50) would retard the impulse charging timing.

10. A control apparatus of engine according to claim 1, which is provided with:
catalyst activity detecting means (69) which detects the activity status of an exhaust gas catalytic converter of the engine;
engine speed detecting means (66)which detects engine speed;
engine load detecting means (68) which detects the engine load; and
ignition means (16) which ignites mixture of injected fuel and the air,
wherein the control means (100), which controls the impulse charger (50) and the ignition means (16) based on the catalyst activity detecting means (69), engine speed and load detecting means (66)(68), operates impulse charger (50) to charge the impulse in each cylinder (12A-12D) each cycle at low-temperature state lower than an active temperature for the exhaust gas catalytic converter and delays an ignition timing of the ignition means (16) to a specified timing which is set after top center of compression stroke in operation of the impulse charger (50).

11. A control apparatus of engine according to claim 10, which is provided with:
temperature detecting means (67) which detects a temperature (Wt) with respect to a cylinder temperature of engine (10) and
a variable impulse charge timing mechanism (56) which is capable of varying an impulse charging timing of the impulse charger (50),
wherein the control means (100) advances the impulse charging timing of impulse charger(50) as rising the detected cylinder temperature, provided that the detected cylinder temperature (Wt)reaches to a preset cylinder temperature (Wt1).

12. A control apparatus of engine according to claim 11,
wherein the control means (100) advances the ignition timing of the ignition means (16) with advancing the impulse charger (50).

13. A control apparatus of engine according to claim 11 or 12, wherein the control means (100) controls a valve opening timing of the impulse charger (50) to be the most retarded phase when the engine (10)runs at a catalyst activity accelerate mode which is, at least, in a first phase.

14. A control apparatus of engine according to claim 10, which is provided with:
temperature detecting means (67) which detects a temperature (Wt) with respect to a cylinder temperature of engine (10) and
a variable impulse charge timing mechanism (56) which is capable of varying an impulse charging timing,
wherein the control means (100) controls a valve opening timing of the impulse charger (50), which is set at a halfway point of each intake stroke each cycle, to be the most retarded phase when the engine (10)runs at a catalyst activity accelerate mode during which the detected temperature (Wt) is lower than a preset cylinder temperature (Wt1).

15. A control apparatus of engine according to claim 13 or 14, wherein the most retarded phase of the impulse charger (50) is set to a posterior half of each intake stroke each cycle.

16. A control apparatus of engine according to one of claims 10 to 15, which is provided with:
fuel injectors (21)for distributed to the cylinders (12A-12D) to inject fuels in each corresponding cylinder (12A-12D) based on the control of the control means (100),
wherein the control means (100) activates the fuel injectors (21) so that each fuel injector injects the fuel immediately before the impulse charger (50) charges the impulse.

17. A control apparatus of engine according to claim 16,
wherein the control means (100) control the fuel injection means (21) to conduct multi-spray within an intake valve (19) opening period of each intake stroke each cycle when the engine (10)runs at catalyst activity accelerate mode.

18. A control apparatus of engine according to claim 17,
wherein the control means (100) controls the fuel injection means (21) to inject anterior fuel at an anterior halfway point of each intake stroke each cycle prior to the impulse charger (50) charges impulse and to inject posterior fuel at a timing of each intake stroke each cycle at which the impulse charger (50) is about to charge the impulse.

19. A control apparatus of engine according to claim 18,
wherein, the control means deactivates the impulse charger during a timing of engine start.

20. A control apparatus of engine according to one of claims 1 to 11, which is provided with:
a collection member (42) to which the intake ducts (43A-43D) are so connected as to inlet of the intake ducts (43A-43D) are in communication with the collection member (42),
wherein the impulse charger (50) is made up of a rotary valve (50) which is accommodated within the collection member (42) and formed therein a opening (52 and 53) to selectively intercommunicate and close each intake ducts (43A-43D) with the collection member (42) by the rotation in synchronism with a crankshaft (3).

## Patentansprüche

1. Steuerungsvorrichtung einer Mehrzylinderbrennkraftmaschine, die versehen ist mit:
Einlasskanälen (43A - 43D), die durch einzelne Einlassöffnungen (17) Luft an mehrere Zylinder (12A - 12D) liefern;
ein Impulsladegerät (50), das den Impuls in jedem Zylinder (12A- 12D) an Punkten auf halbem Weg in jedem Ansaugtakt auflädt, während jedes Einlassventil (19) die entsprechende Einlassöffnung (17) öffnet;
ein Motordrehzahlerfassungsmittel (66), das eine Motordrehzahl erfasst;
ein Motorlasterfassungsmittel (68), das Motorlastzustände erfasst;
ein Steuermittel (100), das den Betrieb des Impulsladegeräts (50) basierend auf Erfassungen durch die Motordrehzahl- und Motorlasterfassungsmittel steuert, **dadurch gekennzeichnet, dass**:
das Steuermittel (100) das Impulsladegerät (50) in einem Niederdrehzahlbereich in Nieder- und Hochlastbereichen, außer einem Mittellastbereich in einem Niedertemperaturbereich einschließlich Kaltstart, betreibt.

2. Steuerungsvorrichtung einer Mehrzylinderbrennkraftmaschine nach Anspruch 1, die versehen ist mit:
einem Temperaturerfassungsmittel (67), das als einen Steuerparameter die Temperatur hinsichtlich der Zylinder (12A - 12D) des Motors (10) erfasst;
wobei das Steuermittel (100) das Impulsladegerät (50) betreibt, um den Impuls in jedem Zylinder (12A - 12D) in jedem Zyklus während des Kaltstarts derart zu laden, dass die erfasste Temperatur (Wt) niedriger als eine vorgegebene Zylindertemperatur (Wt1) ist.

3. Steuerungsvorrichtung eines Motors nach Anspruch 2, wobei das Impulsladegerät (50) einen variablen Impulsladezeitsteuerungsmechanismus (56) umfasst, der fähig ist, eine Impulsladezeit des Impulsladegeräts (50) zu ändern,
wobei das Steuermittel (100) den variablen Impulsladezeitsteuerungsmechanismus (56) steuert, um die Impulsphase in einer derartigen Weise zu verzögern, dass das Impulsladegerät (50) die Impulse auf jedem halben Weg des Ansaugtakts jedes Zyklus umso stärker verzögert, je niedriger die Motortemperatur ist.

4. Steuerungsvorrichtung eines Motors nach Anspruch 2 oder 3, wobei das Steuermittel (100) eingerichtet ist, um das Impulsladegerät (50) anzusteuern, um den Impuls in jedem Zylinder (12A - 12D) in jedem Zyklus in dem Motorniederdrehzahl- und Niederlastbereich zu laden, selbst wenn der Motor während des Warmlaufens läuft, in dem die Zylindertemperatur (Wt) höher als eine vorgegebene Zylindertemperatur (Wt1) ist, während das Impulsladegerät (50) angesteuert wird, den Impuls in jedem Zylinder (12A - 12D) in jedem Zyklus in einem Bereich höherer Drehzahl während des Kaltstarts zu laden.

5. Steuervorrichtung eines Motors nach einem der Ansprüche 2 bis 4,
wobei das Steuermittel (100) das Impulsladegerät (50) betreibt, wenn der Motor (10) während des Warmlaufens mit der Leerlaufdrehzahl läuft, wobei die Motortemperatur wenigstens eine vorgegebene Zylindertemperatur (Wt1) ist.

6. Steuerungsvorrichtung eines Motors nach einem der Ansprüche 2 bis 5, die versehen ist mit:
Brennstoffeinspritzern (21), um verteilt an die Zylinder (12A - 12D) Brennstoffe in jeden Zylinder (12A - 12D) in jedem Zyklus unter der Steuerung des Steuermittels (100) einzuspritzen,
wobei das Steuermittel (100) jeden Einspritzer (21) betreibt, so dass er während des Kaltstarts den Brennstoff an jedem früheren Halbwegpunkt des Ansaugtakts in jedem Zyklus vor dem geladenen Impuls einspritzt, während er während des Warmlaufens den Brennstoff in jedem Zyklus unmittelbar zu der Zeit, zu der das Impulsladegerät (50) den Impuls auflädt, einspritzt.

7. Steuerungsvorrichtung eines Motors nach einem der Ansprüche 1 bis 6, die versehen ist mit:
einem Verbindungsdurchgang (61), der stromabwärtig von dem Impulsladegerät (50) positioniert ist und so angeschlossen ist, dass die Einlasskanäle (43A - 43D) mit den Einlasskanälen (43A - 43A) untereinander verbunden sind, und
einem Ventilmechanismus (63, 64, 65), der einen gemeinsamen Kanal, der den Verbindungsdurchgang (61) mit den Einlasskanälen (43A - 43D) verbindet, unter der Steuerung des Steuermittels (100) alternativ öffnet und schließt,
wobei das Steuermittel (100) den Ventilmechanismus (63, 64, 65) öffnet, um den Verbindungsdurchgang (61) mit den Einlasskanälen (43A - 43D) zu verbinden, wenn der Motor (10) in dem Niederdrehzahl- und wenigstens in dem Teillastbereich ist.

8. Steuerungsvorrichtung eines Motors nach einem der Ansprüche 1 bis 7, wobei das Impulsladegerät (50) einen variablen Impulsladezeitsteuerungsmechanismus (56) umfasst, der fähig ist, eine Impulsladezeit des Impulsladegeräts (50) zu variieren, und das Steuermittel (100) eine Impulsladezeit durch den variablen Impulsladezeitsteuerungsmechanismus (56) steuert.

9. Steuerungsvorrichtung eines Motors nach Anspruch 1 oder 8, wobei das Impulsladegerät einen variablen Impulsladezeitsteuerungsmechanismus (56) umfasst, der fähig ist, eine Impulsladezeitsteuerung des Impulsladegeräts (50) zu variieren, und das Steuermittel (100) eine Impulsladezeitsteuerung durch den variablen Impulsladezeitsteuerungsmechanismus (56) derart steuert, dass das Impulsladegerät (50) die Impulsladezeitsteuerung umso stärker verzögert, je dichter die Motorlast sich der weit offenen Drossel annähert.

10. Steuerungsvorrichtung eines Motors nach Anspruch 1 die versehen ist mit:
einem Katalysatoraktivitätserfassungsmittel (69), das den Aktivitätszustand eines Abgaskatalysators des Motors erfasst;
einem Motordrehzahlerfassungsmittel (66), das die Motordrehzahl erfasst;
einem Motorlasterfassungsmittel (68), das die Motorlast erfasst; und
einem Zündungsmittel (16), das die Mischung des eingespritzten Brennstoffs und der Luft zündet,
wobei das Steuermittel (100), welches das Impulsladegerät (50) und das Zündungsmittel (16) basierend auf dem Katalysatoraktivitätserfassungsmittel (69), dem Motordrehzahl- und dem Lasterfassungsmittel (66) (68) steuert, das Impulsladegerät (50) betreibt, um den Impuls in jedem Zylinder (12A - 12D) in jedem Zyklus in einem Niedertemperaturzustand, der niedriger als eine aktive Temperatur für den Abgaskatalysator ist, zu laden, und eine Zündungszeit des Zündungsmittels (16) im Betrieb des Impulsladegeräts (50) auf eine spezifizierte Zeit verzögert, die nach dem oberen Umkehrpunkt des Verdichtungstakts festgelegt ist.

11. Steuerungsvorrichtung eines Motors nach Anspruch 10, die versehen ist mit:
einem Temperaturerfassungsmittel (67), das eine Temperatur (Wt) in Bezug auf eine Zylindertemperatur des Motors (10) erfasst, und
einem variablen Impulsladezeitsteuerungsmechanismus (56), der fähig ist, eine Impulsladezeit des Impulsladegeräts (50) zu ändern,
wobei das Steuermittel (100) die Impulsladezeit des Impulsladegeräts (50) beim Ansteigen der erfassten Zylindertemperatur vorrückt, sofern die erfasste Zylindertemperatur (Wt) eine vorgegebene Zylindertemperatur (Wt1) erreicht.

12. Steuerungsvorrichtung eines Motors nach Anspruch 11, wobei das Steuermittel (100) die Zündungszeit des Zündungsmittels (16) mit dem Vorrücken des Impulsladegeräts (50) vorrückt.

13. Steuerungsvorrichtung eines Motors nach Anspruch 11 oder 12,
wobei das Steuermittel (100) eine Ventilöffnungszeit des Impulsladegeräts (50) steuert, so dass sie die am stärksten verspätete Phase ist, wenn der Motor (10) in einem Katalysatoraktivitätsbeschleunigungsmodus wenigstens in einer ersten Phase läuft.

14. Steuerungsvorrichtung eines Motors nach Anspruch 10, die versehen ist mit:
einem Temperaturerfassungsmittel (67), das eine Temperatur (Wt) in Bezug auf eine Zylindertemperatur des Motors (10) erfasst, und
einem variablen Impulsladezeitsteuerungsmechanismus (56), der fähig ist, eine Impulsladezeit des Impulsladegeräts (50) zu ändern,
wobei das Steuermittel (100) eine Ventilöffnungszeit des Impulsladegeräts (50) steuert, die auf einem Halbwegpunkt jedes Ansaugtakts jedes Zyklus angewendet wird, die die am stärksten verspätete Phase ist, wenn der Motor (10) in einem Katalysatoraktivitätsbeschleunigungsmodus läuft, während dem die erfasste Temperatur (Wt) niedriger als eine vorgegebene Zylindertemperatur (Wt1) ist.

15. Steuerungsvorrichtung eines Motors nach Anspruch 13 oder 14,
wobei die am stärksten verspätete Phase des Impulsladegeräts (50) auf eine spätere Hälfte jedes Ansaugtakts jedes Zyklus festgelegt ist.

16. Steuerungsvorrichtung eines Motors nach einem der Ansprüche 10 bis 15, die versehen ist mit:
Brennstoffeinspritzern (12), um verteilt an die Zylinder (12A - 12D) basierend auf der Steuerung des Steuermittels (100) Brennstoffe in jeden entsprechenden Zylinder (12A - 12D) einzuspritzen,
wobei das Steuermittel (100) die Brennstoffeinspritzer (21) betätigt, so dass jeder Brennstoffeinspritzer den Brennstoff unmittelbar, bevor das Impulsladegerät den Impuls auflädt, einspritzt.

17. Steuerungsvorrichtung eines Motors nach Anspruch 16, wobei das Steuermittel (100) das Brennstoffeinspritzmittel (21) steuert, um innerhalb der Öffnungszeitspanne eines Einlassventils (19) in jedem Ansaugtakt jedes Zyklus mehrfach zu sprühen, wenn der Motor (10) im Katalysatoraktivitätsbeschleunigungsmodus läuft.

18. Steuerungsvorrichtung eines Motors nach Anspruch 17, wobei das Steuermittel (100) das Brennstoffeinspritzmittel (21) steuert, um frühen Brennstoff an einem frühen Halbwegpunkt jedes Ansaugtakts jedes Zyklus einzuspritzen, bevor das Impulsladegerät (50) den Impuls auflädt, und um späteren Brennstoff zu einem Zeitpunkt jedes Ansaugtakts in jedem Zyklus einzuspritzen, zu dem das Impulsladegerät (50) im Begriff ist, den Impuls zu laden.

19. Steuerungsvorrichtung eines Motors nach Anspruch 18, wobei das Steuermittel das Impulsladegerät während der Dauer des Motorstarts deaktiviert.

20. Steuerungsvorrichtung eines Motors nach einem der Ansprüche 1 bis 11, die versehen ist mit:
einem Sammelelement (42), mit dem die Einlasskanäle (43A - 43D) derart verbunden sind, dass der Einlass der Einlasskanäle (43A - 43D) in Verbindung mit dem Sammelelement (42) steht,
wobei das Impulsladegerät (50) aus einem Drehschieber (50) gefertigt ist, der in dem Sammelelement (42) untergebracht ist und darin eine Öffnung (52 bis 53) ausgebildet ist, um durch die Drehung synchron mit einer Kurbelwelle (3) selektiv jeden Ansaugkanal (43A - 43D) mit dem Sammelelement (42) zu verbinden und zu verschließen.

## Revendications

1. Dispositif de contrôle d'un moteur à multicylindres qui est prévu avec :
des conduits d'admission (43A - 43D) qui fournissent de l'air à travers des orifices d'admission individuels (17) à une pluralité de cylindres (12A- 12D) ;
un chargeur d'impulsions (50) qui charge les impulsions dans chaque cylindre (12A - 12D) sur des points à mi distance dans chaque course d'admission pendant que chaque soupape d'admission (19) est en train d'ouvrir l'orifice d'admission correspondant (17) ;
un moyen de détection de la vitesse du moteur (66) qui détecte une vitesse de moteur ;
un moyen de détection de la charge du moteur (68) qui détecte des conditions de charge du moteur ; et
un moyen de contrôle (100) qui contrôle le fonctionnement du chargeur d'impulsions (50) sur la base des détections par les moyens de détection de la vitesse du moteur et de la charge du moteur, **caractérisé en ce que** :
le moyen de contrôle (100) fait fonctionner le chargeur d'impulsions (50) sur une zone de basse vitesse, sur des zones à charge basse et élevée à l'exception de la zone à charge moyenne, sur une zone de basse température qui inclut le démarrage à froid.

2. Dispositif de contrôle d'un moteur à multicylindres conformément à la revendication 1, lequel est prévu avec :
un moyen de détection de la température (67) qui détecte, comme un paramètre de contrôle, la température par rapport au cylindre (12A - 12D) du moteur (10),
dans lequel le moyen de contrôle (100) fait fonctionner le chargeur d'impulsions (50) de manière à charger les impulsions dans chaque cylindre (12A - 12D) de chaque cycle pendant le démarrage à froid de telle sorte que la température détectée (Wt) est plus basse qu'une température de cylindre pré-ajustée (Wt1).

3. Dispositif de contrôle d'un moteur conformément à la revendication 2, dans lequel le chargeur d'impulsions (50) inclut un mécanisme de synchronisation de charge des impulsions variables (56) qui est capable de varier une synchronisation de charge des impulsions du chargeur d'impulsions (50), dans lequel le moyen de contrôle (100) contrôle le mécanisme de synchronisation de charge des impulsions variables (56) afin de retarder la phase des impulsions d'une manière telle que plus la température du moteur est basse, plus le chargeur d'impulsions (50) va retarder la phase des impulsions dans chaque demi distance de chaque cycle de course d'admission.

4. Dispositif de contrôle d'un moteur conformément à l'une ou l'autre des revendications 2 et 3, dans lequel le moyen de contrôle (100) est agencé de manière à commander le chargeur d'impulsions (50) pour charger les impulsions dans chaque cylindre (12A - 12D) de chaque cycle sur une zone de basse vitesse et de basse charge du moteur, même si le moteur tourne pendant l'échauffement sur lequel la température de cylindre (Wt) est plus élevée qu'une température de cylindre pré-ajustée (Wt1) pendant la commande du chargeur d'impulsions (50) pour charger les impulsions dans chaque cylindre (12A - 12D) de chaque cycle sur une zone à plus haute vitesse pendant le démarrage à froid.

5. Dispositif de contrôle d'un moteur conformément à l'une des revendications 2 à 4,
dans lequel le moyen de contrôle (100) fait fonctionner le chargeur d'impulsions (50) lorsque le moteur (10) tourne à la vitesse de marche à vide pendant l'échauffement, sur laquelle la température de moteur est au moins une température de cylindre pré-ajustée (Wt1).

6. Dispositif de contrôle d'un moteur conformément à l'une des revendications 2 à 5, lequel est prévu avec :
des injecteurs de carburant (21) pour la distribution aux cylindres (12A - 12D) afin d'injecter du carburant dans chaque cylindre (12A - 12D) de chaque cycle étant sous le contrôle du moyen de contrôle (100) ;
dans lequel le moyen de contrôle (100) fait fonctionner chaque injecteur (21) pour injecter le carburant sur chaque point antérieur à mi distance de la course d'admission de chaque cycle avant les impulsions chargées pendant le démarrage à froid pendant que le carburant est injecté au prochain moment sur lequel le chargeur d'impulsions (50) charge les impulsions de chaque cycle pendant l'échauffement.

7. Dispositif de contrôle d'un moteur conformément à l'une des revendications 1 à 6, lequel est prévu avec :
un passage d'interconnexion (61) qui est positionné sur un endroit d'aval du chargeur d'impulsions (50) et qui est relié aux conduits d'admission (43A - 43D) de manière à interconnecter les conduits d'admission (43A - 43D) l'un avec l'autre, et
un mécanisme à soupape (63, 64, 65) qui ouvre et qui ferme alternativement un canal de jonction qui interconnecte le passage d'interconnexion (61) avec les conduits d'admission (43A - 43D) sous le contrôle du moyen de contrôle (100),
dans lequel le moyen de contrôle (100) ouvre le mécanisme à soupape (63, 64, 65) afin de relier le passage d'interconnexion (61) aux conduits d'admission (43A - 43D) lorsque le moteur (10) se trouve dans la zone de basse vitesse et au moins dans la zone de charge partielle.

8. Dispositif de contrôle d'un moteur conformément à l'une des revendications 1 à 7,
dans lequel le chargeur d'impulsions (50) inclut un mécanisme de synchronisation de charge des impulsions variables (56) qui est capable de varier une synchronisation de charge des impulsions du chargeur d'impulsions (50) et dans lequel le moyen de contrôle (100) contrôle une synchronisation de charge des impulsions par l'intermédiaire du mécanisme de synchronisation de charge des impulsions variables (56).

9. Dispositif de contrôle d'un moteur conformément à l'une ou l'autre des revendications 1 et 8, dans lequel le chargeur d'impulsions (50) inclut un mécanisme de synchronisation de charge des impulsions variables (56) qui est capable de varier une synchronisation de charge des impulsions du chargeur d'impulsions (50) et dans lequel le moyen de contrôle (100) contrôle une synchronisation de charge des impulsions par l'intermédiaire du mécanisme de synchronisation de charge des impulsions variables (56) d'une manière telle que plus la charge du moteur se rapproche de la soupape d'étranglement à plein régime, plus le chargeur d'impulsions (50) va retarder la synchronisation de charge des impulsions.

10. Dispositif de contrôle d'un moteur conformément à la revendication 1, lequel est prévu avec :
un moyen de détection de l'activité de catalyseur (69) qui détecte l'état d'activité d'un convertisseur catalytique de gaz d'échappement du moteur ;
un moyen de détection de la vitesse du moteur (66) qui détecte une vitesse de moteur ;
un moyen de détection de la charge du moteur (68) qui détecte la charge du moteur ; et
un moyen d'allumage (16) qui allume le mélange injecté de carburant et d'air,
dans lequel le moyen de contrôle (100) qui contrôle le chargeur d'impulsions (50) et le moyen d'allumage (16) sur la base du moyen de détection de l'activité de catalyseur (69), des moyens de détection de la vitesse du moteur et de la charge du moteur (66) (68), fait fonctionner le chargeur d'impulsions (50) de manière à charger les impulsions dans chaque cylindre (12A - 12D) de chaque cycle sur un état de basse température plus bas qu'une température active pour le convertisseur catalytique de gaz d'échappement et qui retarde une synchronisation d'allumage du moyen d'allumage (16) à un moment spécifié qui est ajusté après le point mort supérieur de la course de compression pendant le fonctionnement du chargeur d'impulsions (50).

11. Dispositif de contrôle d'un moteur conformément à la revendication 1, lequel est prévu avec :
un moyen de détection de la température (67) qui détecte une température (Wt) par rapport à une température de cylindre du moteur (10), et
un mécanisme de synchronisation de charge des impulsions variables (56) qui est capable de varier une synchronisation de charge des impulsions du chargeur d'impulsions (50),
dans lequel le moyen de contrôle (100) avance la synchronisation de charge des impulsions lors de l'augmentation de la température de cylindre détectée, à condition que la température de cylindre détectée (Wt) atteigne une température de cylindre pré-ajustée (Wt1).

12. Dispositif de contrôle d'un moteur conformément à la revendication 11, dans lequel le moyen de contrôle (100) avance la synchronisation d'allumage du moyen d'allumage (16) avec l'avancement du chargeur d'impulsions (50).

13. Dispositif de contrôle d'un moteur conformément à l'une ou l'autre des revendications 11 et 12, dans lequel le moyen de contrôle (100) contrôle un moment d'ouverture de la soupape du chargeur d'impulsions (50) qui doit être la phase la plus retardée lorsque le moteur (10) tourne sur un mode accéléré d'activité de catalyseur qui est au moins dans une première phase.

14. Dispositif de contrôle d'un moteur conformément à la revendication 10, lequel est prévu avec :
un moyen de détection de la température (67) qui détecte une température (Wt) par rapport à une température de cylindre du moteur (10), et
un mécanisme de synchronisation de charge des impulsions variables (56) qui est capable de varier une synchronisation de charge des impulsions,
dans lequel le moyen de contrôle (100) contrôle un moment d'ouverture de la soupape du chargeur d'impulsions (50) qui est ajusté sur un point à mi distance de chaque cycle de chaque course d'admission, qui doit être la phase la plus retardée lorsque le moteur (10) tourne sur un mode accéléré d'activité de catalyseur pendant lequel la température détectée (Wt) est plus basse qu'une température de cylindre pré-ajustée (Wt1).

15. Dispositif de contrôle d'un moteur conformément à l'une ou l'autre des revendications 13 et 14, dans lequel la phase la plus retardée du chargeur d'impulsions (50) est ajustée sur une moitié postérieure de chaque cycle de chaque course d'admission.

16. Dispositif de contrôle d'un moteur conformément à l'une quelconque des revendications 10 à 15, lequel est prévu avec :
des injecteurs de carburant (21) pour la distribution aux cylindres (12A - 12D) afin d'injecter du carburant dans chaque cylindre correspondant (12A - 12D) sur la base du contrôle du moyen de contrôle (100),
dans lequel le moyen de contrôle (100) active les injecteurs de carburant (21) de telle sorte que chaque injecteur de carburant injecte le carburant immédiatement avant que le chargeur d'impulsions (50) charge les impulsions.

17. Dispositif de contrôle d'un moteur conformément à la revendication 16, dans lequel le moyen de contrôle (100) contrôle le moyen d'injection de carburant (21) afin de conduire le multi spray pendant une période d'ouverture de la soupape d'admission (19) de chaque cycle de chaque course d'admission lorsque le moteur (10) tourne sur un mode accéléré d'activité de catalyseur.

18. Dispositif de contrôle d'un moteur conformément à la revendication 17, dans lequel le moyen de contrôle (100) contrôle le moyen d'injection de carburant (21) pour l'injection antérieure de carburant sur un point antérieur à mi distance de chaque cycle de chaque course d'admission avant que le chargeur d'impulsions (50) charge les impulsions et procède à l'injection postérieure de carburant à un moment de chaque cycle de chaque course d'admission sur lequel le chargeur d'impulsions (50) est sur le point de charger les impulsions.

19. Dispositif de contrôle d'un moteur conformément à la revendication 18, dans lequel le moyen de contrôle désactive le chargeur d'impulsions pendant un moment du démarrage de moteur.

20. Dispositif de contrôle d'un moteur conformément à l'une des revendications 1 à 11, lequel est prévu avec :
un élément collecteur (42) auquel les conduits d'admission (43A - 43D) sont reliés de manière à faire arriver les conduits d'admission (43A - 43D) qui sont en communication avec l'élément collecteur (42),
dans lequel le chargeur d'impulsions (50) est constitué d'une soupape rotatoire (50) qui est logée à l'intérieur de l'élément collecteur (42) et qui a formé dedans une ouverture (52 et 53) pour l'intercommunication et la fermeture sélectives de chaque conduit d'admission (43A - 43D) avec l'élément collecteur (42) par la rotation en synchronisation avec un vilebrequin (3).
